# EUROPEAN PATENT SPECIFICATION

(11) **EP 3 925 305 B1**
(45) Date of publication and mention of the grant of the patent: **29.11.2023**
(21) Application number: 20708649.7
(22) Date of filing: 14.02.2020
(51) Int. Cl.: H04W 48/16, H04W 76/27

(54) **CONTROLLING THE REPORTING OF EARLY MEASUREMENTS AND CONNECTED MODE MEASUREMENTS BASED ON TRAFFIC VOLUME AND OTHER CONDITIONS**
STEUERUNG DER MELDUNG VON FRÜHMESSUNGEN UND VERBUNDENEN MODUSMESSUNGEN AUF BASIS VON VERKEHRSVOLUMEN UND ANDEREN BEDINGUNGEN
COMMANDE DU RAPPORT DE MESURES PRÉCOCES ET DE MESURES DE MODE CONNECTÉ SUR LA BASE D'UN VOLUME DE TRAFIC ET D'AUTRES CONDITIONS

(30) Priority: 14.02.2019 US 201962805840 P
(43) Date of publication of application: 22.12.2021
(73) Proprietor: Telefonaktiebolaget LM Ericsson (publ), 164 83 Stockholm (SE)
(72) Inventor: RUGELAND, Patrik, 117 58 Stockholm (SE); DA SILVA, Icaro L. J., 170 77 Solna (SE); NADER, Ali, 212 42 Malmö (SE); TEYEB, Oumer, Montréal, QC H4C 1C5 (CA)
(74) Representative: Ericsson
(86) International application number: PCT/IB2020/051278
(87) International publication number: WO 2020/165866

(56) References cited:
- US-A1- 2017 359 747
- US-A1- 2019 014 492
- SPREADTRUM COMMUNICATIONS: "Consideration on early measurement reporting", 3GPP DRAFT; R2-1915020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 8 November 2019 (2019-11-08), XP051816947, Retrieved from the Internet: URL:https://ftp.3gpp.org/tsg_ran/WG2_RL2/T SGR2_108/Docs/R2-1915020.zip R2-1915020 Consideration on early measurement reporting.doc [retrieved on 2019-11-08]

## Description

### RELATED APPLICATIONS

This application claims priority to United States Provisional Application No. 62/805,840, entitled "CONTROLLING THE REPORTING OF EARLY MEASUREMENTS AND CONNECTED MODE MEASUREMENTS BASED ON TRAFFIC VOLUME AND OTHER CONDITIONS," filed February 14, 2019.

### TECHNICAL FIELD

The present disclosure relates, in general, to wireless communications and, more particularly, to controlling the reporting of early measurements and connected mode measurements based on traffic volume and other conditions.

### BACKGROUND

### Carrier Aggregation (CA) and Dual Connectivity (DC) in Long Term Evolution (LTE)

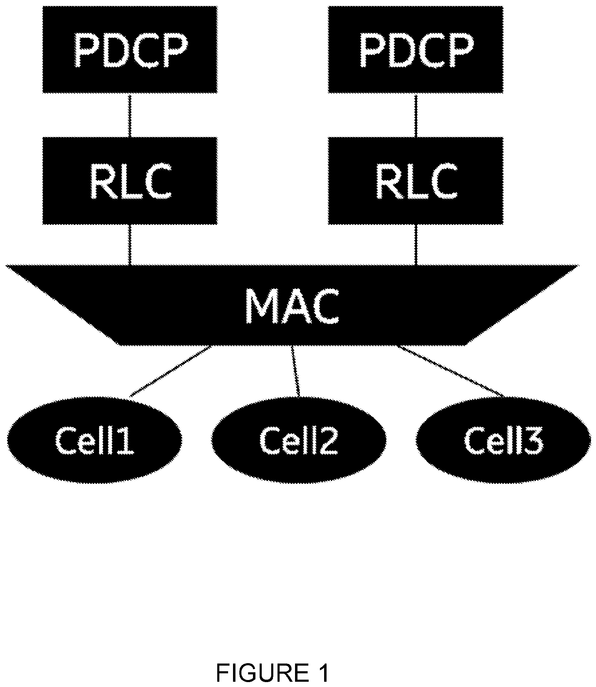

The Third Generation Partnership Project (3GPP) Release (Rel)-10 introduced Carrier Aggregation (CA) in LTE. CA enables the user equipment (UE) to transmit/receive information via multiple cells (so called Secondary Cells (SCells)) from multiple carrier frequencies, to the benefit of the existing non-contiguous and contiguous carriers. In CA terminology, the Primary Cell (PCell) is the cell towards which the UE establishes the radio resource control (RRC) connection or performs handover. In CA, cells are aggregated on the medium access control (MAC)-level. MAC receives grants for a certain cell and multiplexes data from different bearers to one Transport Block being sent on that cell. Additionally, MAC controls how such process is performed. FIGURE 1 illustrates an example of cells aggregated at the MAC-level.

SCells can be "added" (a.k.a. "configured") for the UE using RRC signaling (e.g. RRCConnectionReconfiguration), which takes on the order of hundreds of milliseconds. A cell that is configured for the UE becomes a "serving cell" for that UE. An SCell may also be associated with an SCell state. When configured/added via RRC, an SCell starts in deactivated state. In LTE Rel-15 an Evolved Universal Terrestrial Radio Access Network NodeB (eNB) can indicate that an SCell is to activate-upon-configuration, or the eNB can change the state of an SCell, at least in an RRCReconfiguration message, as described in 3GPP Technical Specification (TS) 38.331 v 15.4.0 and reproduced below:

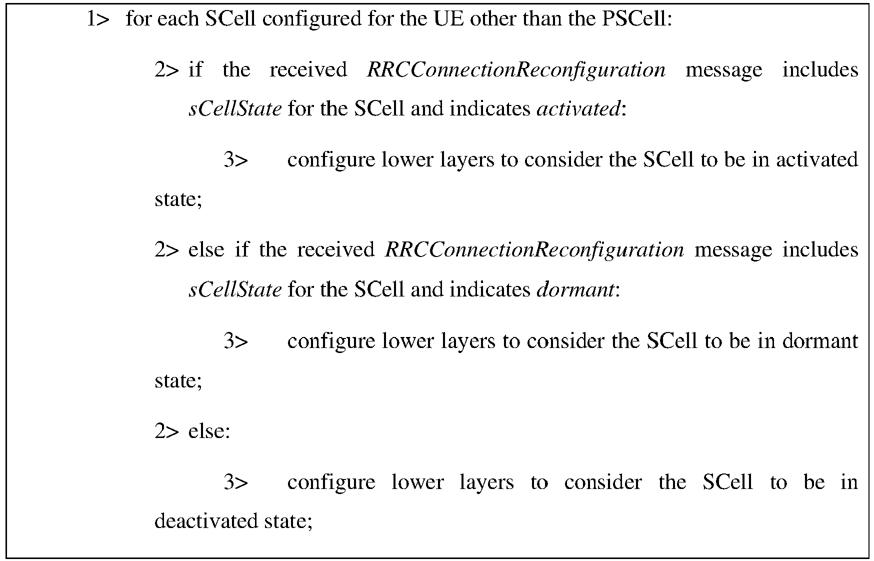

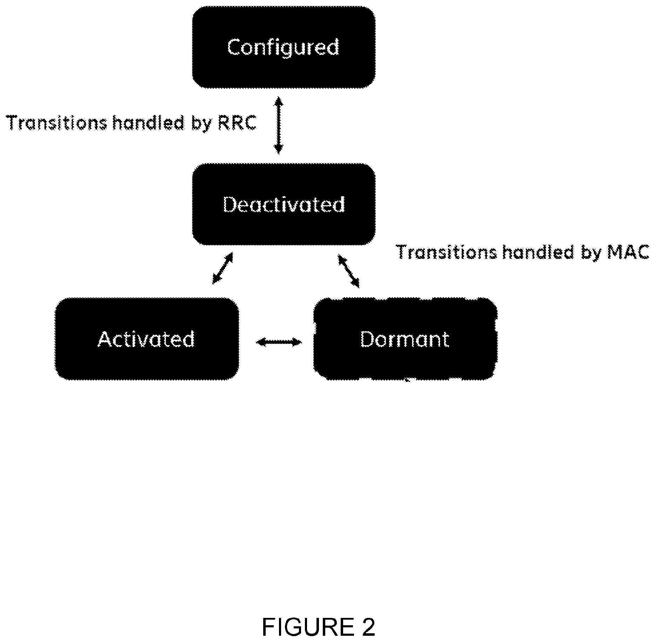

LTE Rel-15 introduced a new intermediate state between the deactivated state and the active state for the enhanced uplink operation. (While present in LTE, this dormant state is not yet present in NR.) A MAC Control Element (MAC CE) can be used to change the SCell state between the three states, as shown in FIGURE 2. There are also timers in MAC to move a cell between deactivated, activated, and dormant states. (Note that the act of moving to the dormant state is called "hibernation"). These timers are:
- *sCellHibernationTimer;* which moves the SCell from activated state to dormant state,
- *sCellDeactivationTimer;* which moves the SCell from activated state to deactivated state
- *dormantSCellDeactivationTimer;* which moves the SCell from dormant state to deactivated state

The MAC level SCell activation takes on the order of 20-30 ms.

Once the network understands the need to configure and/or activate CA, the question becomes which cells to initially configure (and/or activate, if the cells are already configured), and/or whether a cell/carrier is good enough in terms of radio quality/coverage (e.g. reference signal receive power (RSRP) and reference signal receive quality (RSRQ)). To understand the conditions on SCell(s) or potential SCell(s) in a given available carrier, the network may configure the UE to perform radio resource management (RRM) measurements.

Typically, the network may be assisted by RRM measurements that are reported by a UE. The network may configure the UE with measurement identifiers (IDs) associated in reportConfig with event A1 (Serving becomes better than threshold) in case this is a configured SCell, or event A4 (Neighbour becomes better than threshold) for carriers without a configured SCell. The measurement objects are assigned to the carrier that the network wants reports on. If the network is aware of the exact cells it wants the UE to measure, a so-called white cell list can be configured in the measurement object so that the UE is only required to measure those cells in that carrier.

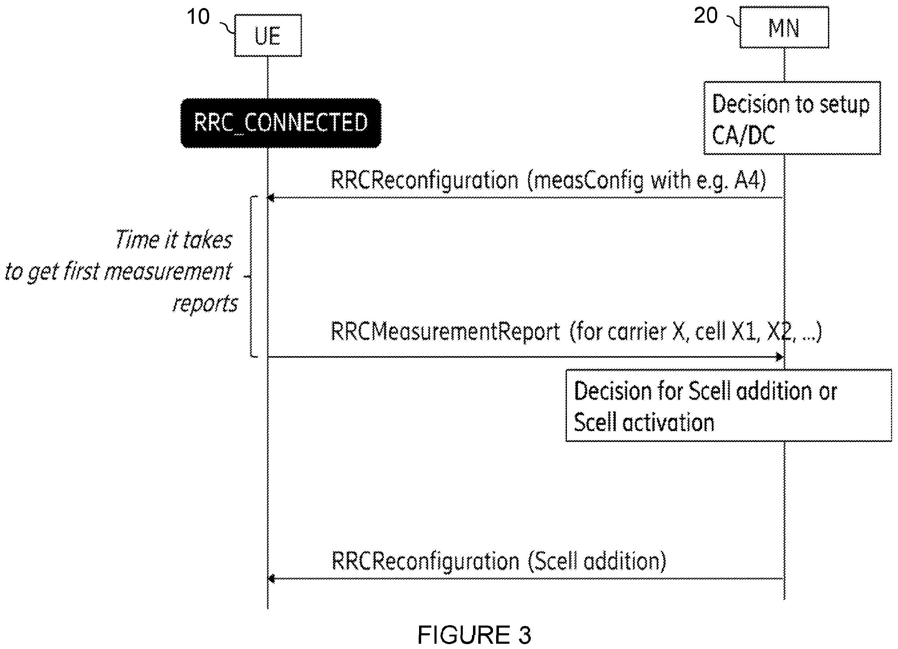

FIGURE 3 illustrates an example in which a UE 10 receives an *RRCReconfiguration* message from master node (MN) 20, obtains measurements, sends an *RRCMeasurementReport* (e.g., for carrier X, cell X1, X2, etc.) back to MN 20, and receives an *RRCReconfiguration* message for Scell addition from MN 20.

The introduction of Dual Connectivity in LTE Rel-12 created the possibility of adding Secondary Cell Group (SCG) configuration to the UE. The main benefit of SCG configuration is that the UE can in principle add a cell from another eNodeB. Protocol wise, this requires different MAC entities, one for each cell group. The UE would then have two cell groups, one associated with the PCell (master node) and another associated with a PScell (of the secondary eNodeB), where each group may possibly have their own associated SCells.

With regard to adding SCells, when the UE is in single connectivity, the *RRCConnectionReconfiguration* message may, for example, carry a cell index (so MAC identifiers are optimized, i.e., shorter), cell identifier and carrier frequency, common parameters, and state information, later introduced in LTE Rel-15 (activated or dormant). Below is an example *RRCConnectionReconfiguration* message, along with a set of field descriptions, reproduced from TS 36.331 v 15.3.0:

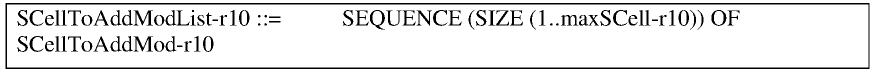

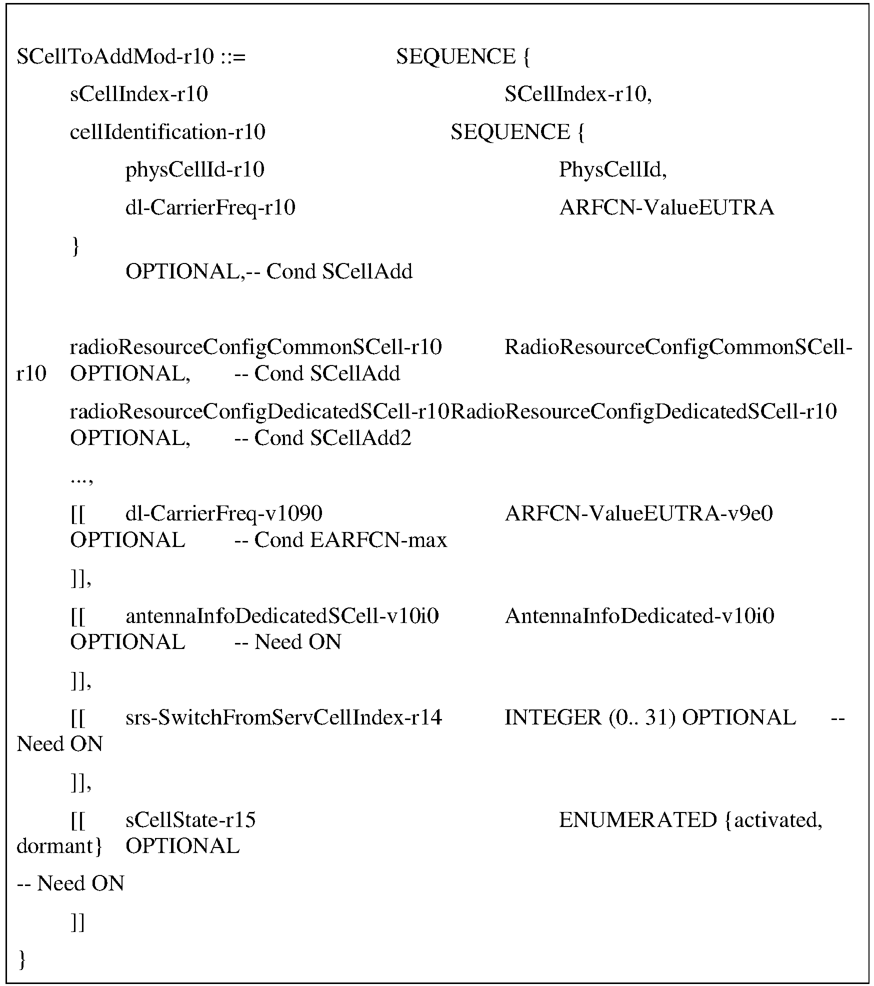

| *RRCConnectionReconfiguration* field descriptions: |
|---|
| ***sCellConfigCommon*** |
| Indicates the common configuration for the SCell group. |
| ***sCellGroupIndex*** |
| Indicates the identity of SCell groups for which a common configuration is provided. |
| ***sCellIndex*** |
| In case of DC, the SCellIndex is unique within the scope of the UE i.e. an SCG cell cannot use the same value as used for an MCG cell. For *pSCellToAddMod,* if *sCellIndex-r13* is present the UE shall ignore *sCellIndex-r12. sCellIndex-r13* in *sCellToAddModListExt-r13* shall not have same values as sCellIndex-r10 in sCellToAddModList-r10. |
| ***sCellGroupToAddModList, sCellGroupToAddModListSCG*** |
| Indicates the SCell group to be added or modified. E-UTRAN only configures at most 4 SCell groups per UE over all cell groups. |
| ***sCellGroupToReleaseList*** |
| Indicates the SCell group to be released. |
| ***sCellState*** |
| A one-shot field that indicates whether the SCell shall be considered to be in activated or dormant state upon SCell configuration. |
| ***sCellToAddModList, sCellToAddModListExt*** |
| Indicates the SCell to be added or modified. Field *sCellToAddModList* is used to add the first 4 SCells for a UE with *sCellIndex-r10* while *sCellToAddModListExt* is used to add the rest. If E-UTRAN includes *sCellToAddModListExt-v1430* it includes the same number of entries, and listed in the same order, as in *sCellToAddModListExt-r13.* If E-UTRAN includes *sCellToAddModList-v10l0* it includes the same number of entries, and listed in the same order, as in *sCellToAddModList-r10.* If E-UTRAN includes *sCellToAddModListExt-v1370* it includes the same number of entries, and listed in the same order, as in *sCellToAddModListExt-r13.* If E-UTRAN includes *sCellToAddModListExt-v13c0* it includes the same number of entries, and listed in the same order, as in *sCellToAddModListExt-r13.* |
| ***sCellToAddModListSCG, sCellToAddModListSCG-Ext*** |
| Indicates the SCG cell to be added or modified. The field is used for SCG cells other than the PSCell (which is added/ modified by field *pSCellToAddMod*). Field *sCellToAddModListSCG* is used to add the first 4 SCells for a UE with *sCellIndex-r10* while *sCellToAddModListSCG-Ext* is used to add the rest. If E-UTRAN includes *sCellToAddModListSCG-v10l0* it includes the same number of entries, and listed in the same order, as in *sCellToAddModListSCG-r12.* If E-UTRAN includes *sCellToAddModListSCG-Ext-v1370* it includes the same number of entries, and listed in the same order, as in *sCellToAddModListSCG-Ext-r13.* If E-UTRAN includes *sCellToAddModListSCG-Ext-v13c0* it includes the same number of entries, and listed in the same order, as in *sCellToAddModListSCG-Ext-r13.* |
| ***sCellToReleaseListSCG, sCellToReleaseListSCG-Ext*** |
| Indicates the SCG cell to be released. The field is also used to release the PSCell e.g. upon change of PSCell, upon system information change for the PSCell. |

The procedure to add SCells to the master cell group (MCG) in LTE (or to modify) as described in 3GPP TS 36.311 V15.8.0 (2019-12) is as follows:

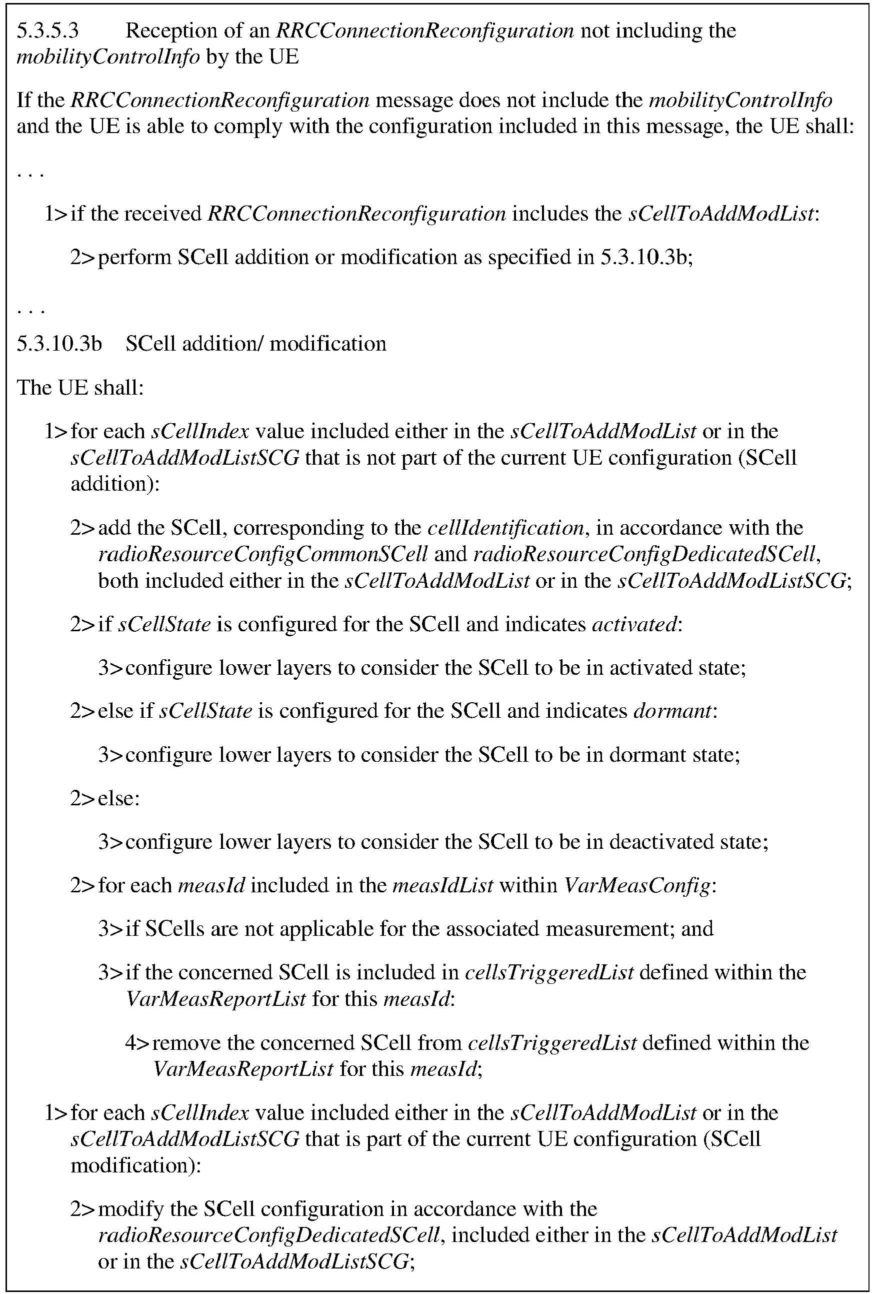

### Inter-RAT and Inter 5GC interworking in LTE and NR

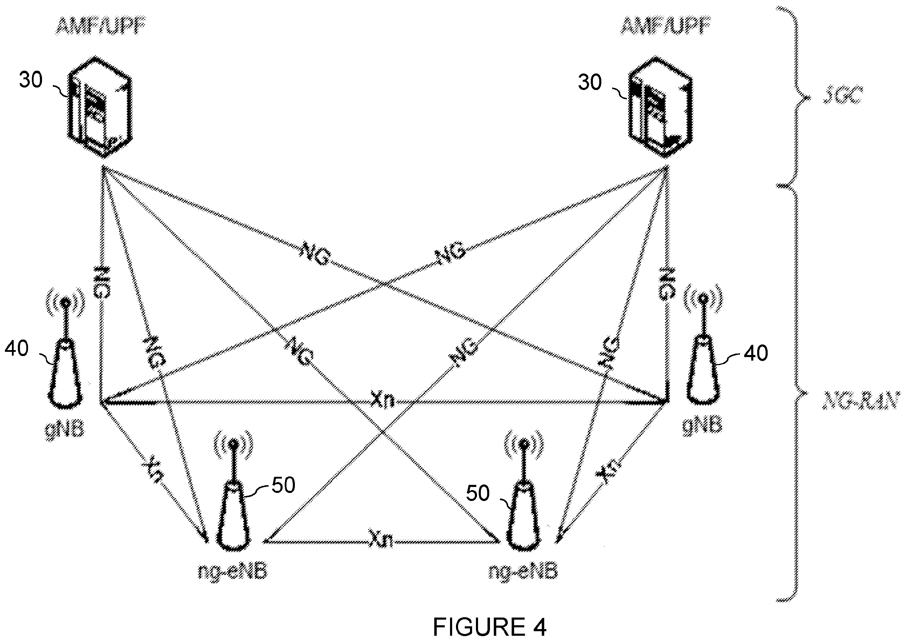

The Fifth Generation (5G) architecture in 3GPP introduces both a new core network (5GC) and a new Radio Access Network (NR). In addition to NR, the core network (5GC) will also support other radio access technologies (RATs). For example, LTE (or Evolved Universal Mobile Telecommunications System (UMTS) Terrestrial Radio Access (E-UTRA)) should also be connected to 5GC. LTE base stations (eNBs) that are connected to 5GC are called ng-eNBs and are part of the next generation radio access network (NG-RAN), which also consists of NR base stations (called gNBs). FIGURE 4 shows how gNBs 40 and ng-eNBs 50 are connected to each other and nodes 30 in 5GC.

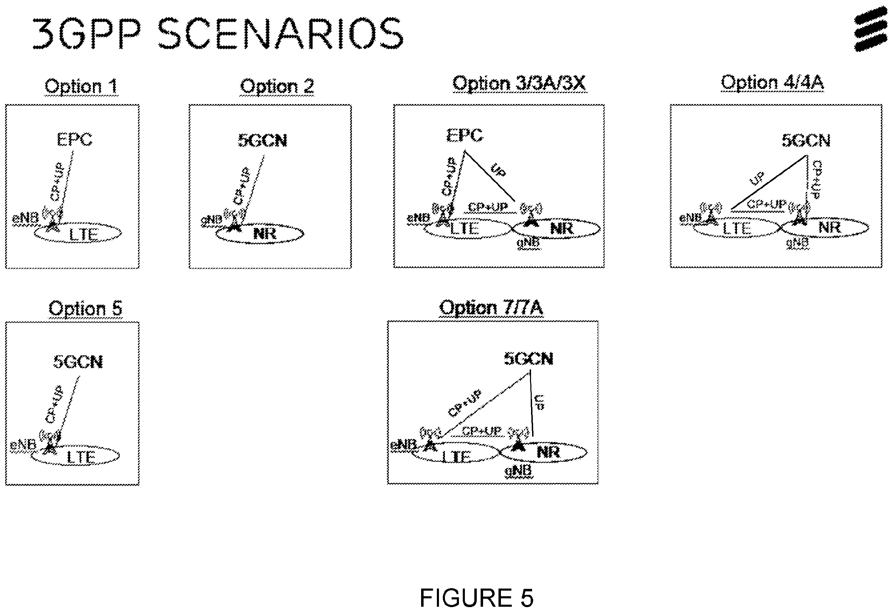

As depicted in FIGURE 5, there are different ways to deploy 5G networks with or without interworking with LTE (also referred to as E-UTRA) and evolved packet core (EPC). In principle, NR and LTE can be deployed without any interworking, denoted by NR standalone (SA) operation; that is, a gNB in NR can be connected to the 5G core network (5GC) and an eNB can be connected to the EPC with no interconnection between the two (Option 1 and Option 2 in FIGURE 5). On the other hand, the first supported version of NR is the so-called EN-DC (E-UTRAN-NR Dual Connectivity), illustrated by Option 3 of FIGURE 5. In such a deployment, dual connectivity between NR and LTE is applied with LTE as the master and NR as the secondary node. The RAN node (gNB) supporting NR may not have a control plane connection to the core network (EPC). Instead, it relies on the LTE as the master node (MeNB). This is also called "Non-standalone NR." Notice that in this case the functionality of an NR cell is limited and would be used for connected mode UEs as a booster and/or diversity leg, but an RRC_IDLE UE cannot camp on these NR cells.

With the introduction of the 5GC, other options may also be valid. As mentioned above, Option 2 of FIGURE 5 supports stand-alone NR deployment, where a gNB is connected to 5GC. Similarly, LTE can also be connected to 5GC using Option 5 of FIGURE 5 (also known as eLTE, E-UTRA/5GC, or LTE/5GC and the node can be referred to as an ng-eNB). In these cases, both NR and LTE are seen as part of the NG-RAN (and both the ng-eNB and the gNB can be referred to as NG-RAN nodes). It is worth noting that Option 4 and Option 7 of FIGURE 5 are other variants of dual connectivity between LTE and NR which will be standardized as part of NG-RAN connected to 5GC, denoted by MR-DC (Multi-Radio Dual Connectivity). The following exist under the MR-DC umbrella:
- EN-DC (Option 3): LTE is the master node and NR is the secondary (EPC CN employed)
- NE-DC (Option 4): NR is the master node and LTE is the secondary (5GCN employed)
- NGEN-DC (Option 7): LTE is the master node and NR is the secondary (5GCN employed)
- NR-DC (variant of Option 2): Dual connectivity where both the master and secondary are NR (5GCN employed).

Because migration towards these options may differ among different operators, it is possible to have deployments with multiple options in parallel in the same network (e.g. there could be an eNB base station supporting Option 3, 5 and 7 in the same network as an NR base station supporting Options 2 and 4). In combination with dual connectivity solutions between LTE and NR it is also possible to support CA (Carrier Aggregation) in each cell group (i.e. MCG and SCG) and dual connectivity between nodes on the same RAT (e.g. NR-NR DC). For the LTE cells, a consequence of these different deployments is the co-existence of LTE cells associated to eNBs connected to EPC, 5GC or both EPC/5GC.

### Suspend/Resume in LTE and relation to CA / SCell and SCG additions

A typical scenario/use case is a UE with some burst traffic that comes and goes (e.g. some video packets, idle periods of transmission/reception, then becomes live again). To save UE power, the network transitions the UE from connected to idle during these periods. Subsequently, the UE may become active once again (either via paging or a UE request for connection) and access the network.

LTE Rel-13 introduced a mechanism for the network to suspend the UE in a suspended state similar to RRC_IDLE but with the difference that the UE stores the Access Stratum (AS) context or RRC context. This makes it possible to reduce the signaling while the UE is becoming active again by resuming the RRC connection. This is in contrast to previous methods that established the RRC connection again from scratch. Reducing the signaling may be associated with several benefits. As an example, reducing the signaling may reduce latency (e.g. for smart phones accessing the Internet). As another example, reducing the signaling may lead to reduced battery consumption for machine type devices sending very little data.

The Rel-13 solution is based on the fact that the UE sends a *RRCConnectionResumeRequest* message to the network and in response may receive an *RRCConnectionResume* from the network. The *RRCConnectionResume* is not encrypted but integrity protected.

The resume procedure in LTE can be found in the RRC specifications provided in TS 36.331. Because a UE that is performing the resume procedure is initially in RRC_IDLE (with suspended AS context), this triggers a transition from RRC_IDLE to RRC_CONNECTED. Hence, this behaviour is modelled in the specifications in the same subclause that captures the RRC connection establishment (subclause 5.3.3 of TS 36.311, "RRC connection establishment").

There are a few things that are relevant to highlight in the SCG configurations and SCell configurations for MCGs in relation to suspend/resume procedures. Upon suspension, it is defined that the UE stores its used RRC configuration. In other words, if the UE is operating in any dual connectivity mode (and has an SCG configuration) or just having configured SCells in the MCG, it shall store all of these configurations. However, upon resume, at least until Rel-15, it is defined that the UE shall release the SCG configurations and SCell configurations, as described in 3GPP TS 36.331 v 15.3.0, and shown below:

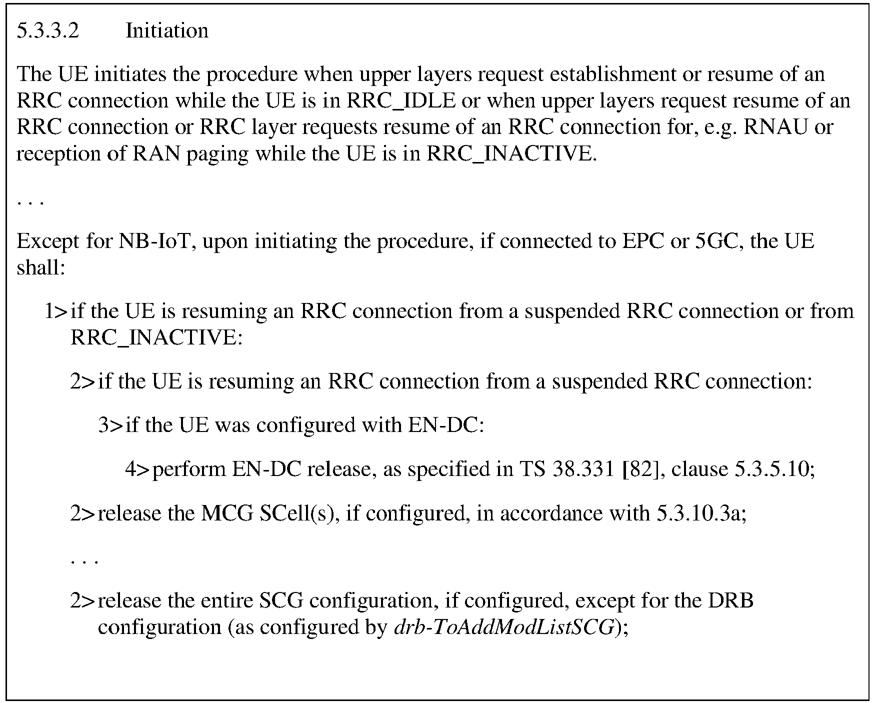

Hence, when the UE comes from RRC_IDLE with the context, if the network wants to add SCell(s) to the MCG or add an SCG, it needs to do this from scratch, even if the UE is suspending and resuming in the same cell/area where all the previous PCell and SCell configurations are still valid from a radio conditions perspective.

As the use case of UEs with burst traffic constantly being suspended and resuming in the same cell is quite typical, 3GPP has standardized a solution in LTE to enable the UE to assist the network with measurements performed while the UE is in RRC_IDLE so that the network can speed up the setup of carrier aggregation or dual connectivity. This solution is described below.

### Existing solution for early measurements upon idle to connected transition in LTE (Rel-15)

In LTE Rel-15, it is possible to configure the UE to report so called early measurements upon the transition from idle to connected state. These measurements are measurements that the UE can perform in idle state, according to a configuration provided by the source cell. The source cell may provide such configuration with the intention of receiving these measurements immediately after the UE becomes connected and thereby quickly setup CA and/or other forms of DC (e.g. EN-DC, MR-DC, etc.) without the need to first provide a measurement configuration (measConfig) in RRC_CONNECTED, as shown in previous sections. In this manner, the source cell may avoid waiting for hundreds of milliseconds until first samples are collected, monitored, and then the first reports are triggered and transmitted to the network.

### Measurement configuration for early measurements upon resume in LTE

A first aspect of the existing solution, as standardized in 3GPP TS 36.331 v 15.3.0, is described in Section 5.6.20 of TS 36.331, "Idle Mode Measurements." The UE can receive idle mode measurement configurations in the system information (SIB5) in the field *MeasIdleConfigSIB-r15,* indicating up to 8 cells or ranges of cell IDs to perform measurements on. In addition, the UE can be configured upon the transition from RRC_CONNECTED to RRC_IDLE with a dedicated measurement configuration in the *RRCConnectionRelease* message with the *measIdleDedicated-r15* which overrides the broadcasted configurations in SIB5. The broadcasted and dedicated signaling, as reproduced from TS 36.311, is shown below:

### RRCConnectionRelease message:

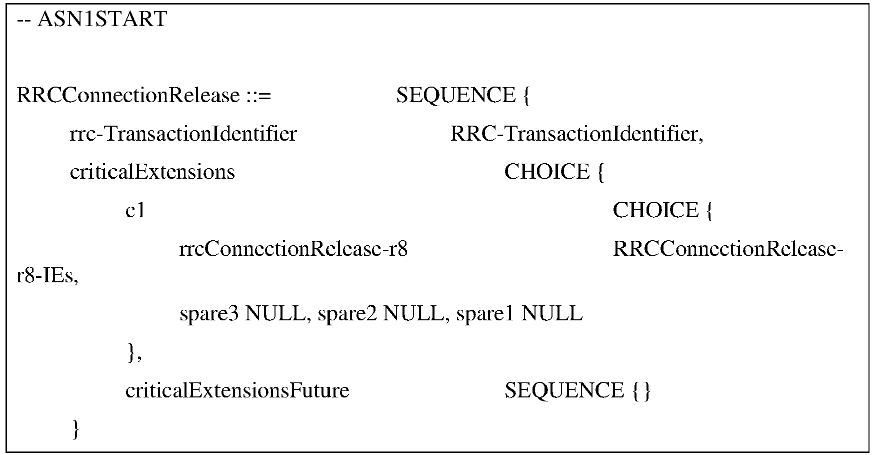

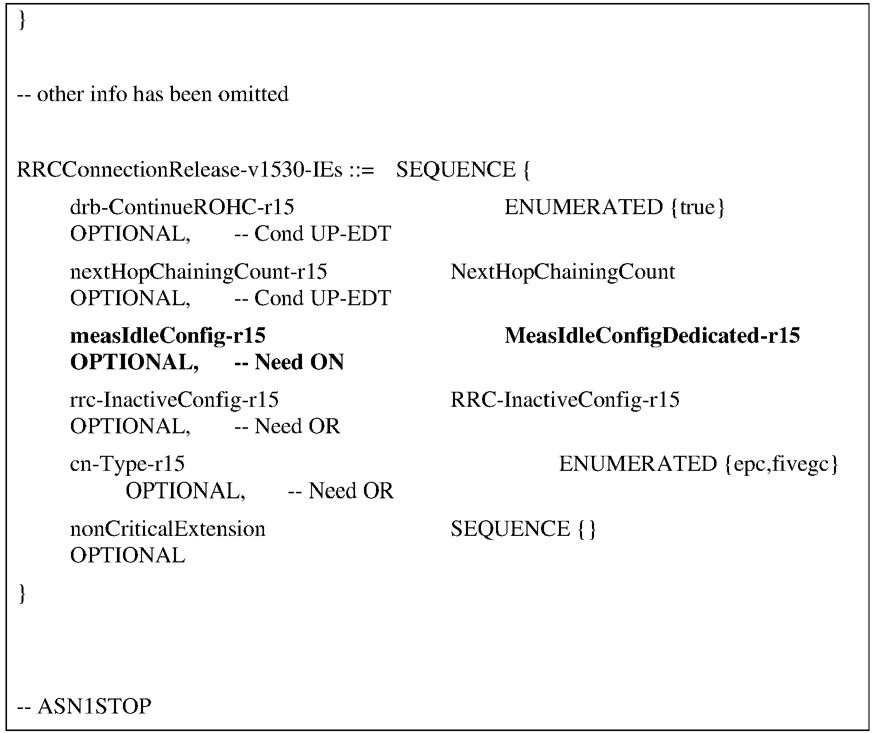

### MeasIdleConfig information element:

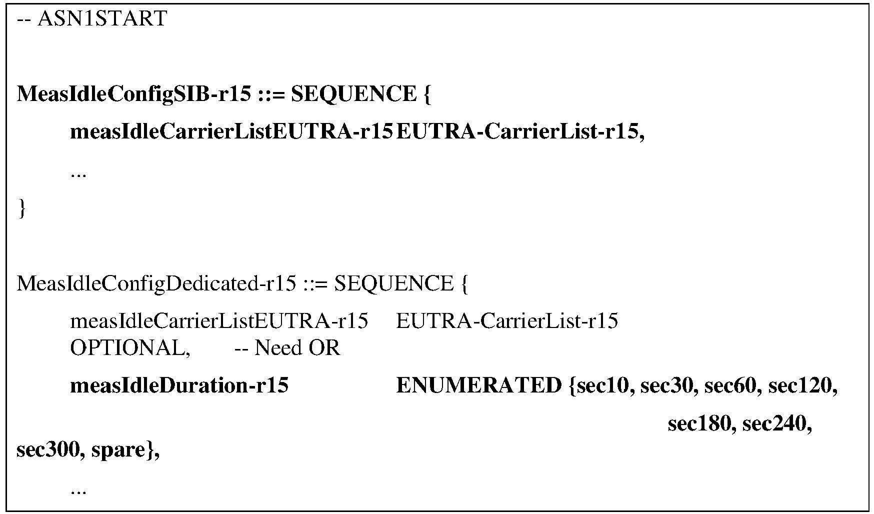

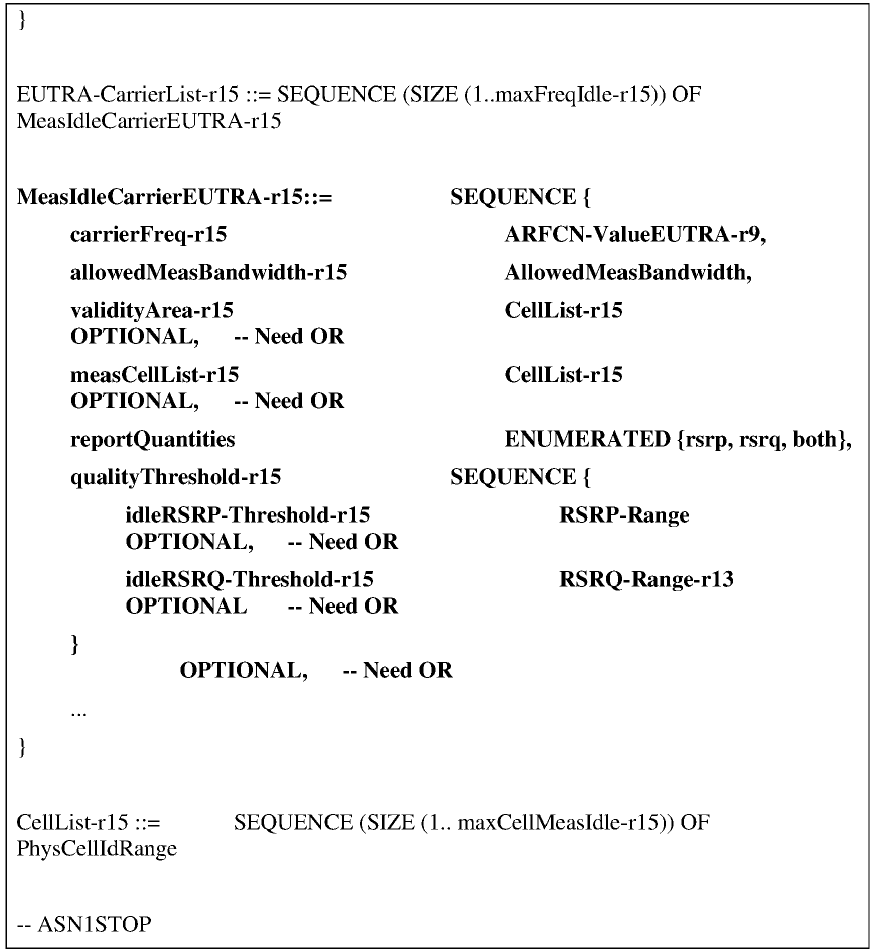

| *MeasIdleConfig* field descriptions: |
|---|
| ***allowedMeasBandwidth*** |
| If absent, the value corresponding to the downlink bandwidth indicated by the *dl-Bandwidt*h included in *MasterInformationBlock* of serving cell applies. |
| ***carrierFreq*** |
| Indicates the E-UTRA carrier frequency to be used for measurements during IDLE mode. |
| ***measIdleCarrierListEUTRA*** |
| Indicates the E-UTRA carriers to be measured during IDLE mode. |
| ***measIdleDuration*** |
| Indicates the duration for performing measurements during IDLE mode for measurements assigned via *RRCConnectionRelease.* Value sec10 correspond to 10 seconds, value sec30 to 30 seconds and so on. |
| ***qualityThreshold*** |
| Indicates the quality thresholds for reporting the measured cells for IDLE mode measurements. |
| ***reportQuantities*** |
| Indicates which measurement quantities UE is requested to report in the IDLE mode measurement report. |
| ***measCellList*** |
| Indicates the list of cells which the UE is requested to measure and report for IDLE mode measurements. |
| ***validityArea*** |
| Indicates the list of cells within which UE is requested to do IDLE mode measurements. If the UE reselects to a cell outside this list, the measurements are no longer required. |

### Carrier information and cell list

The UE is provided with a list of carriers and optionally with a list of cells for which the UE shall perform measurements. The fields s-NonIntraSearch in SystemInformationBlockType3 do not affect the UE measurement procedures in IDLE mode.

### Timer T331

Upon the reception of the measurement configuration, the UE starts a timer T331 with the value provided in *measIdleDuration*, which can run from 0 to 300 seconds. The timer stops upon receiving *RRCConnectionSetup*, or *RRCConnectionResume* which indicates a transition to RRC_CONNECTED. This concept exists to limit the amount of time for which the UE performs measurements for the purpose of early measurements.

### Validity Area

Another concept introduced in the LTE Rel-15 solution is a validity area, which includes a list of physical cell identifiers (PCIs). The intention here is to limit the area where CA or DC may be setup later when the UE resumes/sets up the connection, so that the early measurements are somewhat useful for that purpose. If a validity area is configured and UE reselects to a serving cell whose PCI does not match any entry in validity Area for the corresponding carrier frequency, the timer T331 is stopped. Then, the UE stops performing IDLE measurements and releases the configuration (i.e. VarMeasIdleConfig). Notice that this does not necessarily imply that the UE releases the idle measurements that were configured in Release and that were performed (i.e. these may still be stored and possibly requested by the network). In addition, the UE may continue with IDLE mode measurements according to the broadcasted SIBS configuration after the timer T331 has expired or stopped.

### Minimum quality threshold

Notice also that only measurements above a certain threshold shall be stored as the cell candidates for CA setup needs to be within a minimum acceptable threshold. How the UE performs measurements in IDLE mode is up to UE implementation, provided that RAN4 requirements for measurement reporting defined in 36.133 are met.

The UE behaviour is shown in more detail below, as reproduced from TS 36.331 v 15.3.0:

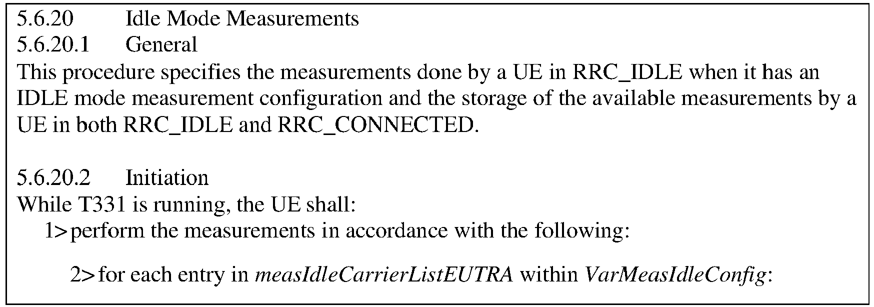

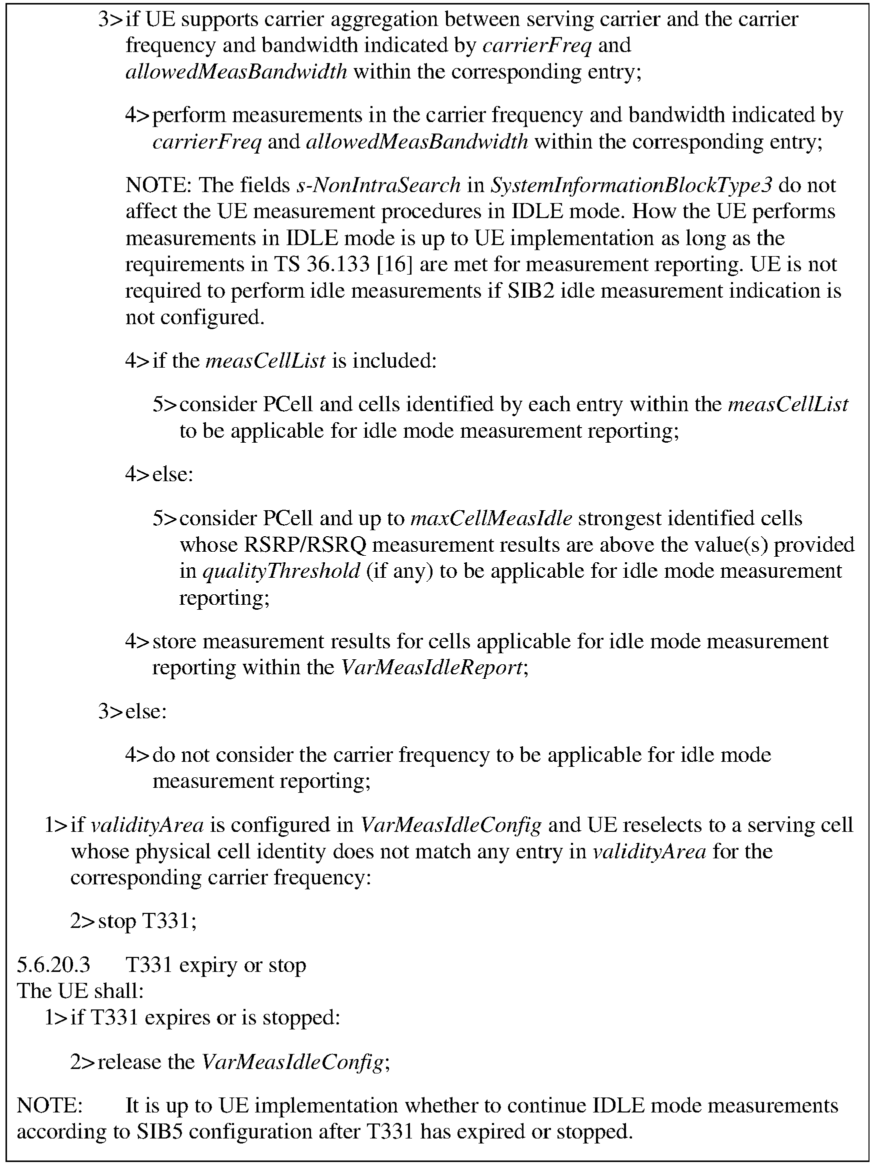

### Indication of available early measurements upon resume/setup in LTE

Another aspect of the existing solution occurs when the UE tries to resume or setup a call from RRC_IDLE without context. If the previous step is performed, i.e., if the UE is configured to store idle measurements, the network may request idle measurements from the UE after resume/setup (after security is activated) whether or not the UE has idle measurements available.

In the case where the UE is setting up a connection coming from RRC_IDLE without the AS Context, the network is not aware that the UE has available measurements stored. Accordingly, to allow the network to know that the UE has available measurements stored, and possibly to request that the UE report early measurements, the UE may indicate the availability of stored idle measurements in *RRCConnectionSetupComplete.* As not all cells will support the feature, the UE only includes this availability information if the cell broadcasts in SIB2 the *idleModeMeasurements* indication. The flag in *RRCReconnectionSetupComplete* and procedure text are shown below, as reproduced from TS 36.331 v 15.3.0:

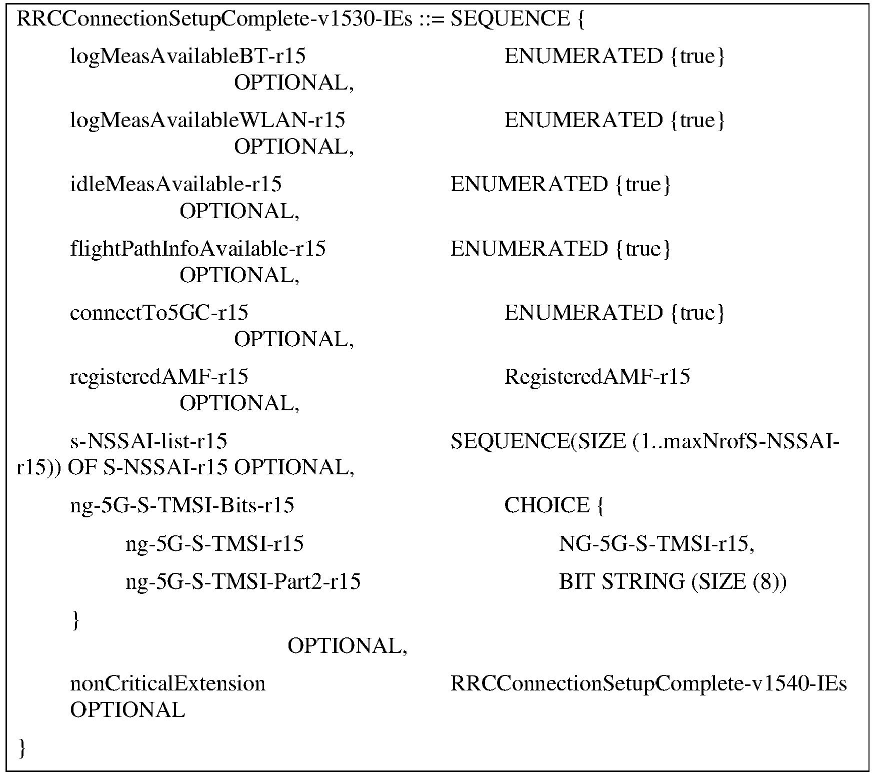

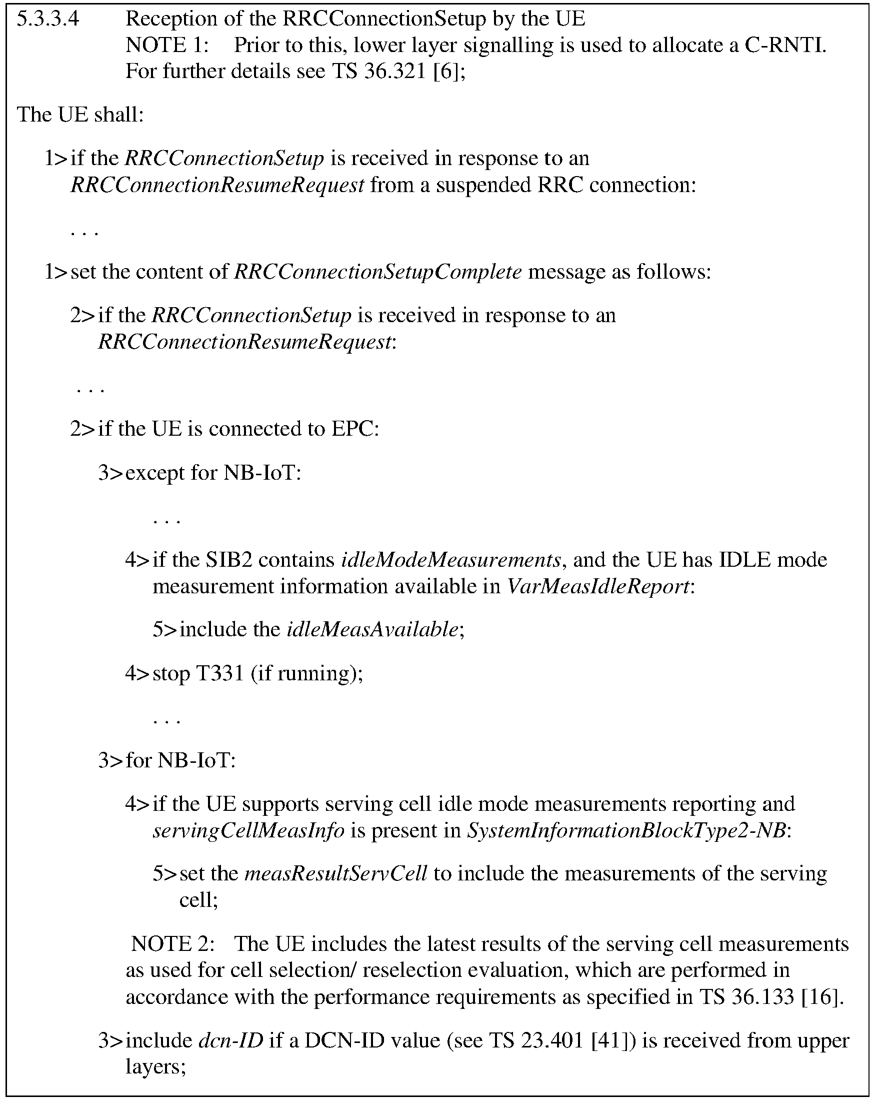

In the case where the UE is setting up a connection coming from RRC_IDLE but with a stored AS Context (i.e. resume from suspended), the network may be aware that the UE may have available idle measurements stored after checking the fetched context from the source node where the UE became suspended. However, it is still not certain that the UE has measurements available since the UE is only required to perform the measurements if the cells are above the configured RSRP/RSRQ thresholds and while it performs cell selection/cell reselection within the configured validity area. Accordingly, to allow the network to know that the UE has measurements available, and possibly to request that the UE report early measurements, the UE may also indicate the availability of stored idle measurements in *RRCConnectionResumeComplete.* As not all cells will support the feature, the UE only includes this availability information if the cell broadcasts in SIB2 the *idleModeMeasurements* indication. The flag in *RRCReconnectionResumeComplete* and procedure text are shown below, as reproduced from TS 36.331 v 15.3.0:

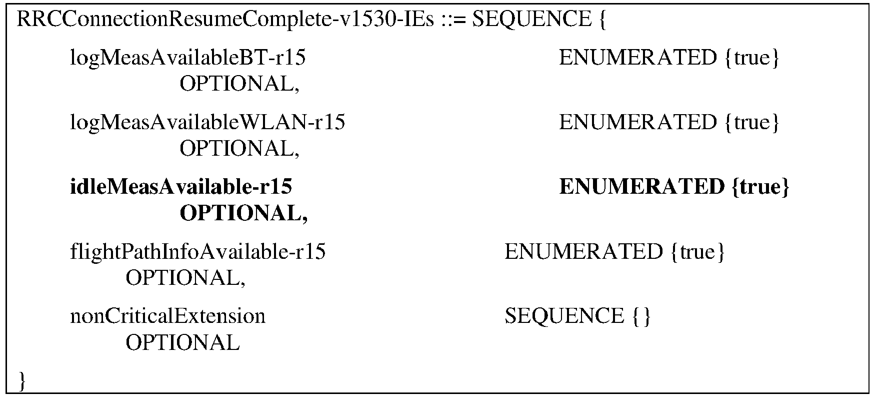

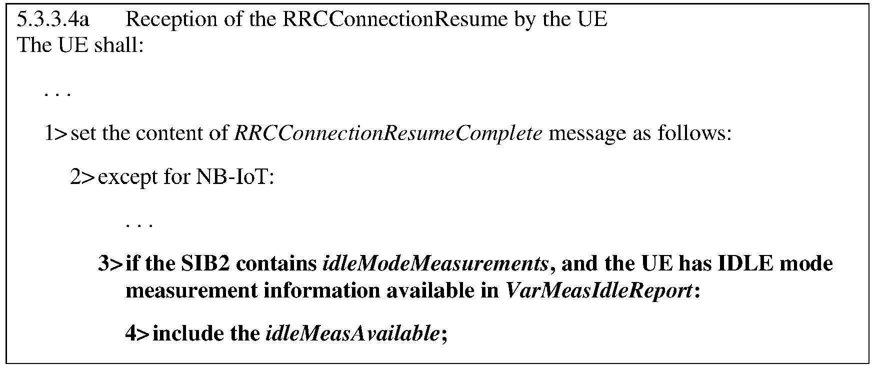

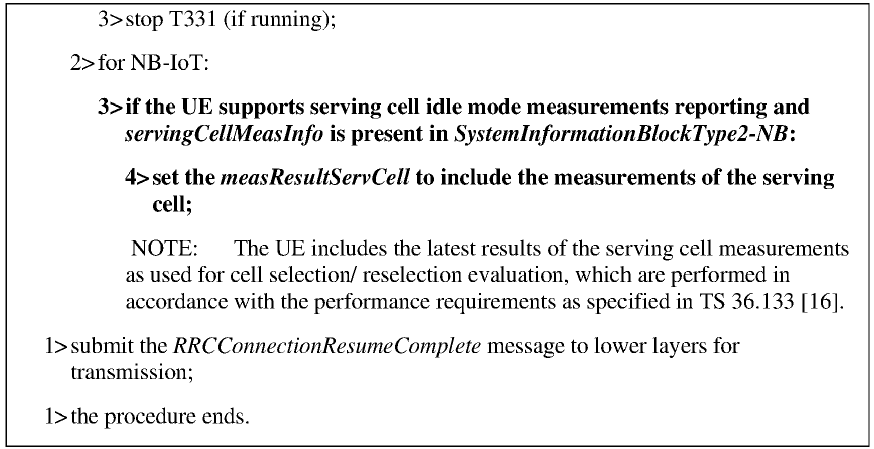

### Reporting of early measurements upon resume/setup in LTE

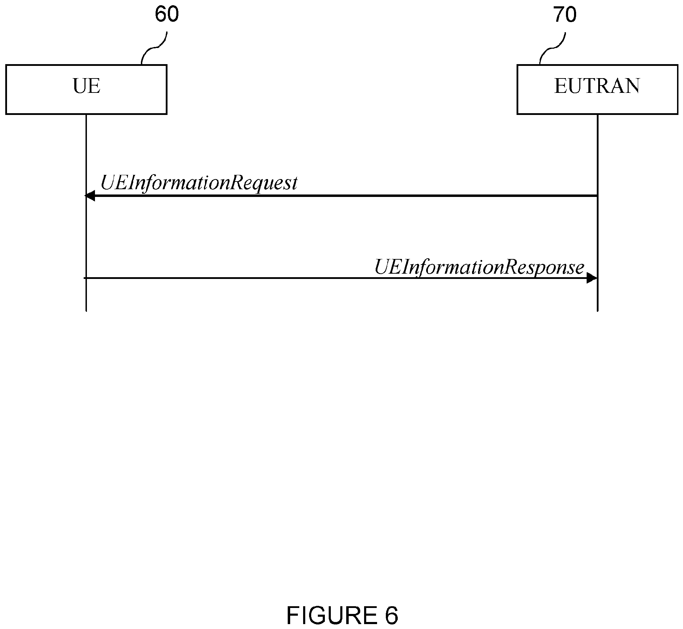

As illustrated in FIGURE 6, once the UE 60 indicates to the target cell upon resume or setup that idle measurements are available, the network 70 may request that UE 60 report these available measurements by including the field *idleModeMeasurementReq* in the *UEInformationRequest* message transmitted to UE 60. Then, UE 60 responds with a *UEInformationResponse* containing these measurements. Details of this procedure, as reproduced from TS 36.331 v 15.3.0, are provided below:

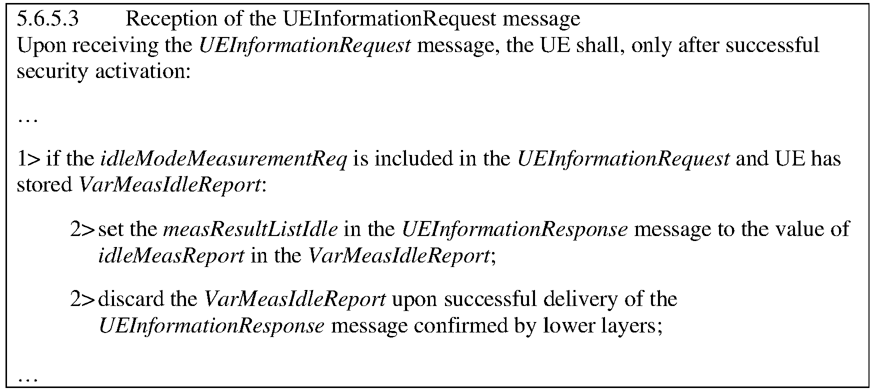

### UEInformationResponse message:

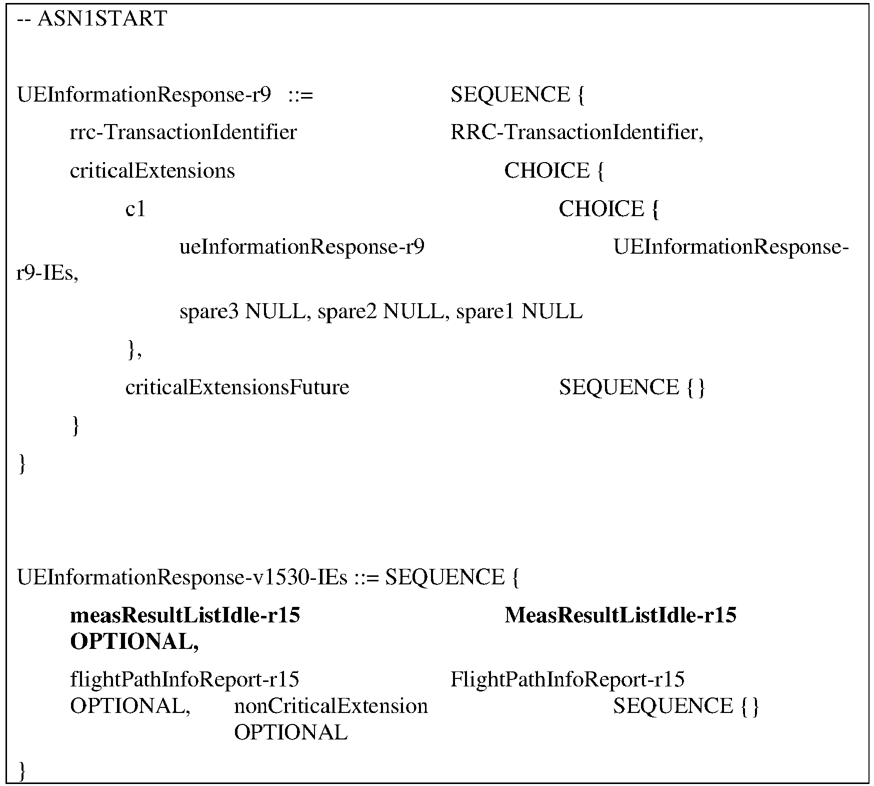

### Buffer status reporting

Buffer Status Reports (BSRs) are used for requesting uplink shared channel (UL-SCH) resources when a UE needs to send new data. Essentially, there are 8 buffers in the MAC entity of a UE in NR (and 4 buffers in LTE), each of which can store data/traffic for a group of logical channels (called Logical Channel Group (LCG)) depending on the mapping configuration. The mapping of a logical channel to an LCG is done at the time when the logical channel is setup by gNB, which may be based on the QoS profile of the channel. Responding to BSR, the network (gNB) may grant UL radio resources to the UE for transmitting the queued data. The radio resource granted to the UE may be used to transmit data from one or more logical channels depending on the priorities of the logical channels.

There are three types of BSR: Regular BSR, Periodic BSR, and Padding BSR, each of which has different triggering conditions. A BSR is triggered if any of the following events occur, as described in 3GPP TS 38.321 and 38.331:
- Regular BSR: the MAC entity has new UL data available for a logical channel which belongs to an LCG; and either (1) the new UL data belongs to a logical channel with higher priority than the priority of any logical channel containing available UL data which belong to any LCG; or (2) none of the logical channels which belong to an LCG contains any available UL data.
- Padding BSR: UL resources are allocated and the number of padding bits is equal to or larger than the size of the BSR MAC CE plus its sub-header
- Periodic BSR: triggered periodically based on a timer called *periodicBSR-Timer.*

The Buffer Size field includes the total amount of data available which is calculated as specified in 3GPP TS 38.322 and TS 38.323, across all logical channels of a logical channel group after the MAC PDU has been built (e.g., after the logical channel prioritization procedure).

US 2019/0014492 A1 discloses a method of performing measurements. The method comprises receiving a first indication of the measurement from a serving cell; performing the measurement on neighbor cells; determining that the UE has a valid measurement result, based on a preconfigured threshold; and transmitting a second indication indicating that UE has the valid measurement result to the serving cell, based on the first indication. US 2017/0359747 A1 discloses a method relating to the setup of carrier aggregation from IDLE mode (or semi-idle or semi-connected or suspended state). The method includes, during or after RRC connection establishment, receiving an indication from at least one UE that it has inter-frequency carrier(s) and/or SCell measurement results available.

### SUMMARY

There currently exist certain challenge(s). When the UE is resuming the connection from a dormant state (e.g. RRC_IDLE with UE AS Context or from RRC_INACTIVE), it may do so for a variety of reasons (e.g. mobile originating (MO) signalling, data, voice or video, or mobile terminated (MT) signalling, data, emergency call or RNA update). The request to resume a suspended connection (or to setup an idle connection) is typically modelled as an interaction from the Non-Access Stratum (NAS) layer and the Access Stratum (AS) layer. It is also the NAS layer that typically sets the cause value, except in the case of a RAN Area Update (which is triggered by AS). In the case of resume, the cause is included in the RRC Resume Request like message as a cause value, as shown below:
ResumeCause ::= ENUMERATED {emergency, highPriorityAccess, mt-Access, mo-Signalling, mo-Data, mo-VoiceCall, mo-VideoCall, mo-SMS, rna-Update, mps-PriorityAccess, mcs-PriorityAccess, spare1, spare2, spare3, spared, spare5 }

For some of these cases, the highest priority is to quickly access the network but with very little bandwidth requirement (e.g. rna-Update and possible mt-Access or mo-SMS).

For other cases, the highest priority is to maximize the bandwidth once the UE has entered RRC_CONNECTED (e.g. mo-Data). However, even if the UE signals mo-Data in the Resume request message, the UE may only have a small amount of data to transmit (e.g. in the case of keep-alive signaling from mobile applications).

LTE Rel-15 introduced a feature called Early Data Transmission (EDT). This feature allows a dormant UE to transmit a specific preamble (configured in system information) to indicate that it has small data to transmit, so that network can provide a larger UL grant in the Random-Access Response. However, when the UE does not use this feature, (e.g., when data is larger or very large), there is no means for the network to know what is expected from the UE. For example, in the situation in which the request to resume originates in the UE, the network will not be able to discern from the information currently reported in RRC Resume Request how much bandwidth the UE requires and might:
- ***configure CA and*/*or DC even if the UE does not need it:*** this is inefficient in terms of network resource usage and in terms of UE energy consumption (e.g. the UE would need to use multiple transceivers and perform monitoring/measuring of multiple carriers, etc.).
- ***not configure CA or*/*****and DC even if the UE would have benefited from it:*** this may lead to possible UE performance degradation due to not enough resources allocated to accommodate the needs of the UE's traffic.

Certain aspects of the present disclosure and their embodiments may provide solutions to these or other challenges. For example, certain embodiments enable a UE to only indicate and/or report early idle/inactive mode measurements and/or connected mode measurements if the UE would benefit from additional carrier capacity using carrier aggregation and/or dual connectivity (e.g., if the additional carrier capacity would improve a property of a service performed by the UE). The UE could determine this capacity need based on, for example, UL buffer status, an indication from application layers that the UE has large pending UL or DL traffic, or based on the quality of service (QoS) requirement of the connection.

According to certain embodiments, a method is disclosed for use at a wireless terminal/user equipment (UE) for controlling, during a transition to a connected state, the transmission of early measurements performed in RRC_IDLE or dormant state (e.g. RRC_IDLE with UE context or RRC_INACTIVE).

In particular, the invention is defined in the appended claims.

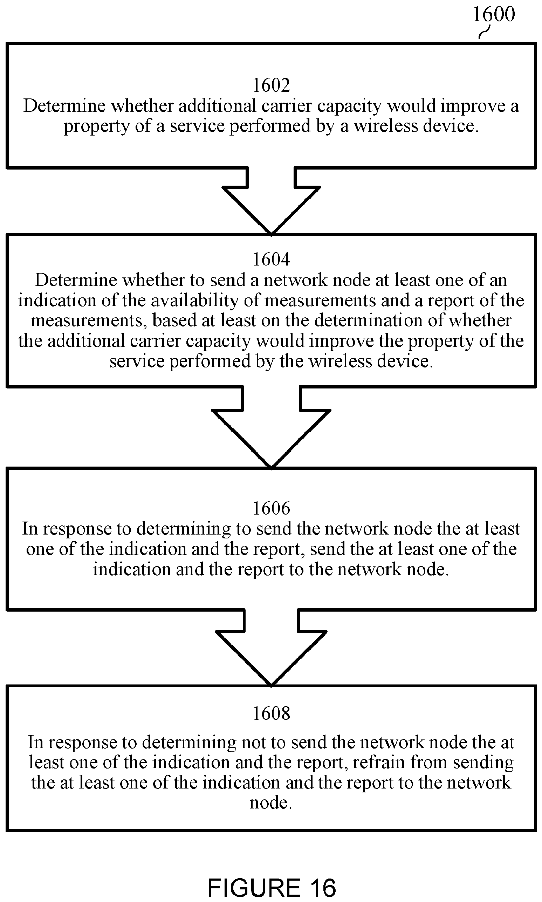

The embodiment of figure 16 falls under the scope of the claims. All the other embodiments do not fall under the scope of the claims. They are however retained as examples to better understand the invention.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an example of carrier aggregation cells aggregated on a MAC-level;
FIGURE 2 illustrates an example of MAC-level SCell activation;
FIGURE 3 presents an example method for RRC Reconfiguration;
FIGURE 4 illustrates an example 5GS architecture that includes 5GC and NG-RAN;
FIGURE 5 presents example options for interworking LTE and NR;
FIGURE 6 presents an example method for reporting early measurements;
FIGURE 7 is an illustration of an exemplary wireless network, in accordance with certain embodiments;
FIGURE 8 is an illustration of an exemplary user equipment, in accordance with certain embodiments;
FIGURE 9 is an illustration of an exemplary virtualization environment, in accordance with certain embodiments;
FIGURE 10 is an illustration of an exemplary telecommunication network connected via an intermediate network to a host computer in accordance with some embodiments;
FIGURE 11 is an illustration of an exemplary host computer communicating via a base station with a user equipment over a partially wireless connection, in accordance with certain embodiments;
FIGURES 12-15 are flowcharts showing exemplary methods implemented in a communication system including a host computer, a base station, and a user equipment, in accordance with certain embodiments;
FIGURES 16-17 are flowcharts showing exemplary methods implemented in a communication system including a wireless device and a network node, in accordance with certain embodiments; and
FIGURE 18 is an illustration of an exemplary virtualization apparatus, in accordance with certain embodiments.

### DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings.

### Example assumptions for early measurements

### Measurement configuration and exact measurements

In this disclosure, the measurement configuration provided to the UE in RRC_IDLE has not been disclosed in detail and is not part of the core of this disclosure. One may assume, as an example, at least the existing solution in Rel-15 in LTE where the UE is provided with a list of carriers, either through broadcasted or dedicated signaling, whose measurements to be performed may also be indicated i.e. RSRP and/or RSRQ. Other configuration may also be present e.g. validity area, timers, list of cells, etc. Also notice that, in certain embodiments, the fundamental aspect is that upon resume the UE has idle/inactive measurements available that may be provided to the network to speed up the setup of carrier aggregation and/or any form of dual/multi-radio connectivity.

The example below provides a possible measurement configuration for these early measurements:

### Example MeasIdleConfig information element:

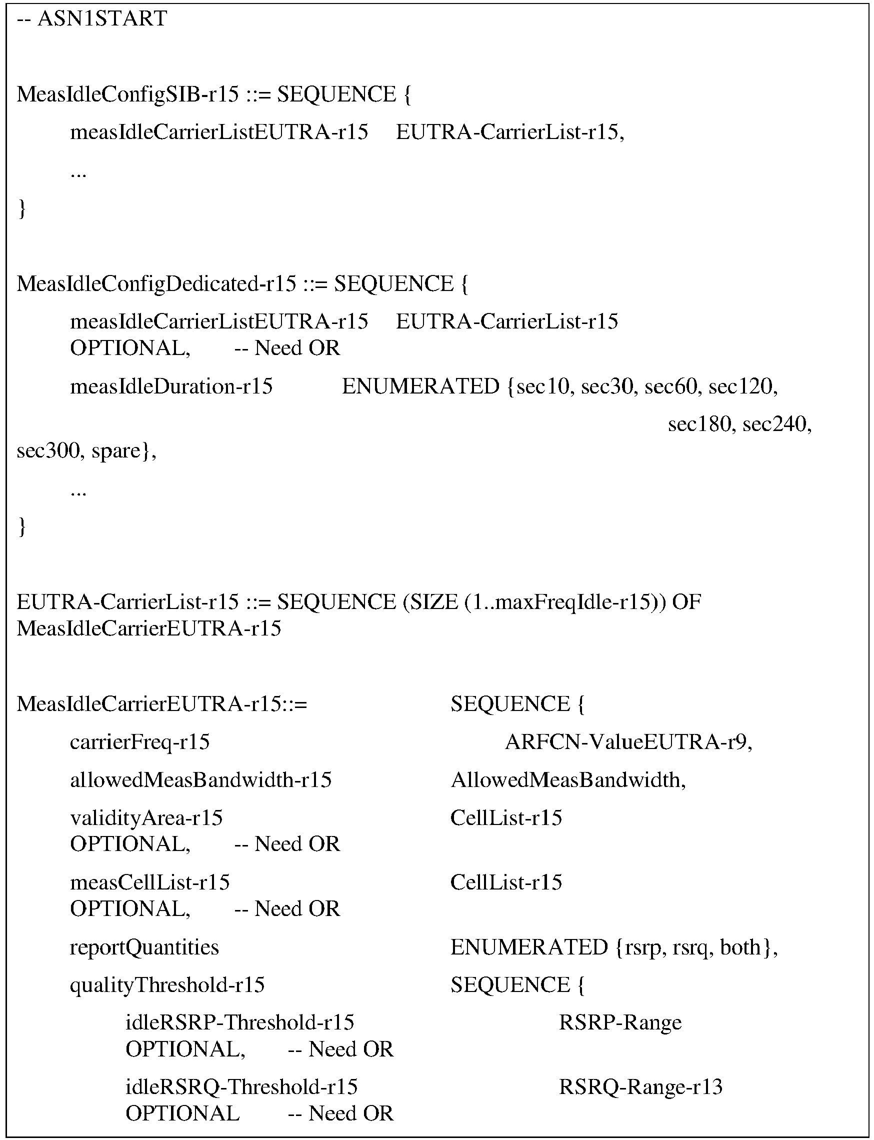

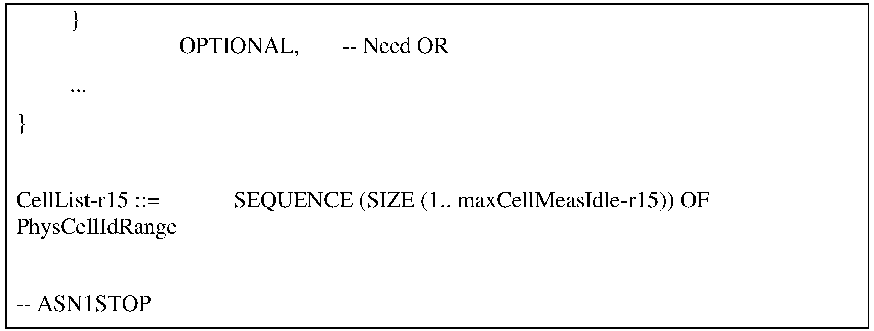

In this disclosure, any suitable measurements may be reported during the transition to RRC_CONNETED. Simply as an example, one may assume at least the existing solution in Rel-15 in LTE, as reproduced from TS 36.331 v 15.3.0 and shown below:

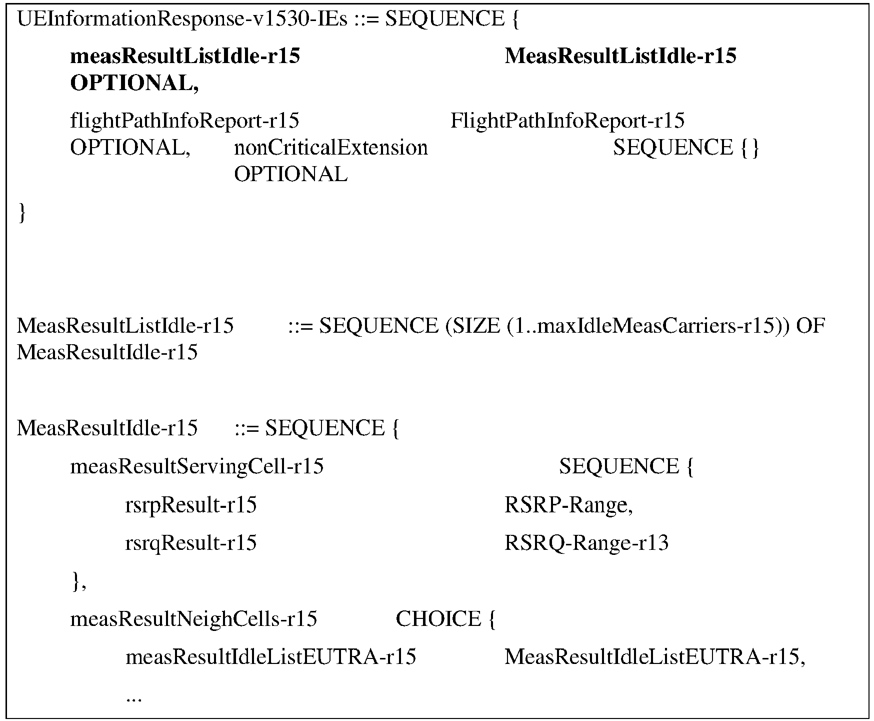

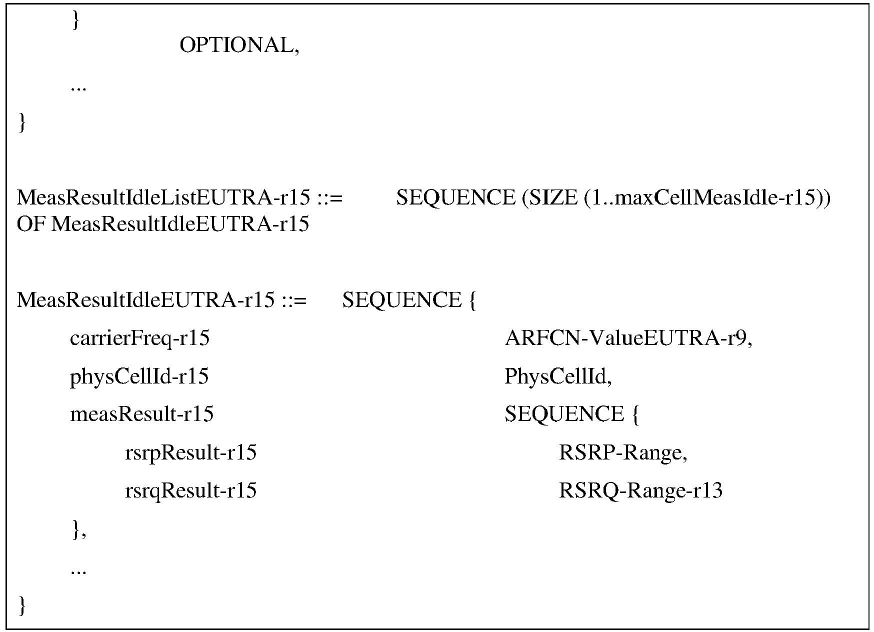

According to certain embodiments, a method at a wireless terminal/User Equipment (UE) is disclosed for measurement reporting during a transition from a dormant state to connected state. In the context of the invention one should interpret dormant state as a protocol state (like an RRC state) where the UE performs actions optimized for power savings, such as:
- RRC_IDLE without stored AS context;
- RRC_IDLE with stored AS context;
- RRC_INACTIVE;

As the method includes the reporting of measurements performed in a dormant state when the UE is trying to resume, it is important to mention that the method covers the case where the UE is suspended in one RAT (e.g. RRC_CONNECTED to RRC_IDLE or RRC_INACTIVE) and tries to resume in another RAT (e.g. RRC_INACTIVE or RRC_IDLE to RRC_CONNECTED), such as in the following cases:
- UE is suspended in NR and resumes in LTE;
- UE is suspended in LTE and resumes in NR;
- UE is suspended in NR and resumes in NR;
- UE is suspended in LTE and resumes in LTE;
- Or, in more general terms, UE is suspended in RAT-1 and resumes in RAT-2, where RAT-1 and RAT-2 may be the same or different RATs;

### Controlling different reporting mechanisms for early measurements

Certain embodiments of the present disclosure include the control of the transmission of early measurements reports during the transition from an IDLE state or dormant state (e.g. RRC_IDLE or RRC_INACTIVE) to a connected state (e.g., during inactive to connected transition). There may be different solutions for this purpose and the method is applicable, but not limited to the following solutions.

In a first solution for early measurements, the UE reads in system information indicating that the network supports early measurements and, if the UE has stored early measurements performed in dormant state, it includes an indication in the RRC Resume Complete like message (or in an RRC Connection Resume Complete, or RRC Connection Setup Complete, etc.). With the proposed method the indication is included in the complete message only if at least one of the proposed conditions related to the UE request service/traffic are fulfilled.

In a variant of the first solution for early measurements, the network may request the UE to report early measurements (e.g. in an *UEInformationRequest*) (e.g. even without receiving from the UE an indication of the availability of early measurements) and the UE reports early measurements (e.g. in a *UEInformationResponse*) only if at least one of the proposed conditions related to the UE request service/traffic are fulfilled.

In a second solution for early measurements, if the UE has stored early measurements performed in dormant state, it includes an indication in the RRC Resume Request like message (e.g. *RRCResumeRequest*, *RRCConnectionResumeRequest*, *RRCSetupRequest*, *RRCConnectionSetupRequest*, etc.). With the proposed method, this indication is included in the request message only if at least one of the proposed conditions related to the UE request service/traffic are fulfilled.

In a variant of the second solution for early measurements, the network may request (e.g. in an RRC Resume like message, like *RRCResume*, *RRCConnectionResume*, *RRCSetup*, *RRCConnectionSetup*) that the UE report early measurements (e.g. even without receiving from the UE an indication of the availability of early measurements). With the proposed method these early measurements are reported (e.g. in an RRC Resume Complete like message such as *RRCResumeComplete*, *RRCSetupComplete*, *SecurityModeCommandComplete*, etc.) only if at least one of the proposed conditions related to the UE request service/traffic are fulfilled.

In a third solution for early measurements, if the UE has stored early measurements performed in dormant state, it indicates this to the network during random-access, by selecting specific random-access parameter(s), such as a specific preamble from a pre-defined set. With the proposed method this indication is transmitted (e.g. UE only selects a specific preamble indicating availability of early measurements to be reported) only if at least one of the proposed conditions related to the UE request service/traffic are fulfilled.

In a variant of the third solution for early measurements, the network may send a random-access response with an indication for early measurement reporting (e.g. even without receiving from the UE an indication of the availability of early measurements). With the proposed method the measurements are transmitted using the UL grant (e.g. in an RRC Resume Request like message such as *RRCResumeRequest*, *RRCConnectionResumeRequest* or multiplexed with the Resume Request like message) only if at least one of the proposed conditions related to the UE request service/traffic are fulfilled.

Although certain examples are focused on early measurements performed during RRC_IDLE or dormant state, the methods are equally applicable for connected mode measurements. In a fourth solution, the UE sends measurement reports that are triggered during RRC_CONNECTED mode (e.g. in a *MeasurementReport* like message) only if at least one of the conditions related to the UE service/traffic are fulfilled. Since the UE is already in connected state, the conditions may be slightly different than the conditions to be considered in IDLE or dormant state (e.g. the UL buffer status or expected DL traffic conditions still apply, while the resume or establishment cause are not applicable to the measurements performed in connected state).

### Detailed description of the conditions

Certain embodiments propose a method in a wireless device to determine whether to report early idle/inactive mode measurements when transitioning from an RRC_IDLE or dormant state (e.g. RRC_IDLE with UA AS context, or from RRC_INACTIVE).

As an example, the method may include the UE performing the following actions:
- Receiving from a network node:
   o a configuration of triggers of when to report early the idle mode measurements
   o a configuration of triggers of when to report connected mode measurements
- Performing and storing idle mode measurements according to received idle mode measurement configurations
- Performing connected mode measurements according to a received measurement configuration
- In the case of a transition to CONNECTED state from dormant or IDLE state, receiving an indication from the network of whether to include early measurements in, for example:
   o Configuration by network prior to entering dormant state
   o Reception of indication from network in, for example, broadcasted system information
   o Reception of indication from network in, for example, an RRC Resume like message
- Determining upon initiation of the RRC Resume request procedure whether to include early measurement based on (in the case of transition to CONNECTED state from dormant or IDLE state) or when the connected mode measurement report triggering conditions are fulfilled (for connected mode measurements):
   o Resume cause (applicable only to early measurements performed during IDLE or Dormant state)
      ▪ The RRC Resume message includes an indication of the reason for resumption in the IE *ResumeCause*

ResumeCause ::= ENUMERATED {emergency, highPriorityAccess, mt-Access, mo-Signalling, mo-Data, mo-VoiceCall, mo-VideoCall, mo-SMS, rna-Update, mps-PriorityAccess, mcs-PriorityAccess, spare1, spare2, spare3, spare4, spare5 }

In one embodiment, whenever the UE initiates a service potentially requiring large bandwidth (e.g. mo-Data, mo-VideoCall) the UE includes the early measurements fulfilling the measurement criteria.

In another embodiment, whenever the UE initiates a service which doesn't require large bandwidth (e.g. rna-Update) the UE doesn't include the early measurements, even if they fulfill the measurement criteria.

In another embodiment, whenever the UE initiates a service by which the UE is unaware of the requirement of bandwidth (e.g. mt-Access) the UE only includes early measurements if the network has requested them explicitly (i.e. not based on broadcasting signaling).
∘ Data type (applicable to both early measurements performed in RRC_IDLE/dormant and measurements performed in connected state)

In one embodiment, the application layer provides information to the access stratum of the type of data that is expected. For instance, if the application layer initiates an ftp download or video streaming, if the AS is informed of this, it could decide to include the early measurements or connected mode measurements.

In another embodiment, if the application layer indicates that the access or the data that is pending to be transmitted or received is of low volume (e.g. due to keep-alive signaling), the AS would not include the early measurements or connected mode measurements.
∘ Quality of Service (applicable to both early measurements performed in RRC_IDLE/dormant and measurements performed in connected state):

In one embodiment, the QoS profile of the data is used as an indication of whether the UE requires high capacity or high reliability. If the UE requires high reliability CA or DC can be used for redundant transmission.
∘ UL buffer status (applicable to both early measurements performed in RRC_IDLE/dormant and measurements performed in connected state)

In one embodiment, the uplink buffer status in the AS is used to determine whether the UE shall include the early measurements or connected mode measurements.

For instance, for the transition from IDLE/dormant to connected mode, if the application layer initiates a large UL data transfer, the data packets will be pushed to the Non-Access Stratum, where they will be buffered. The NAS will request the AS to resume the connection which will initiate the resume procedure. If NAS provides the AS with a buffer status report indicating how much data is pending, the AS can use this information to determine whether to include early measurements or not.

In another embodiment, the UL data is pushed directly to AS e.g. SDAP or PDCP where an AS buffer status is maintained.

In one embodiment, the decision for including or excluding the early measurements could be e.g.:
1>if UL BS > *bufferThreshold:*
2>include *earlyMeasurements* in *earlyMeasurementReport*;

To configure the threshold, the *idleModeMeasurement* could be extended for LTE by introducing, for example, *bufferThreshold*, as illustrated below:

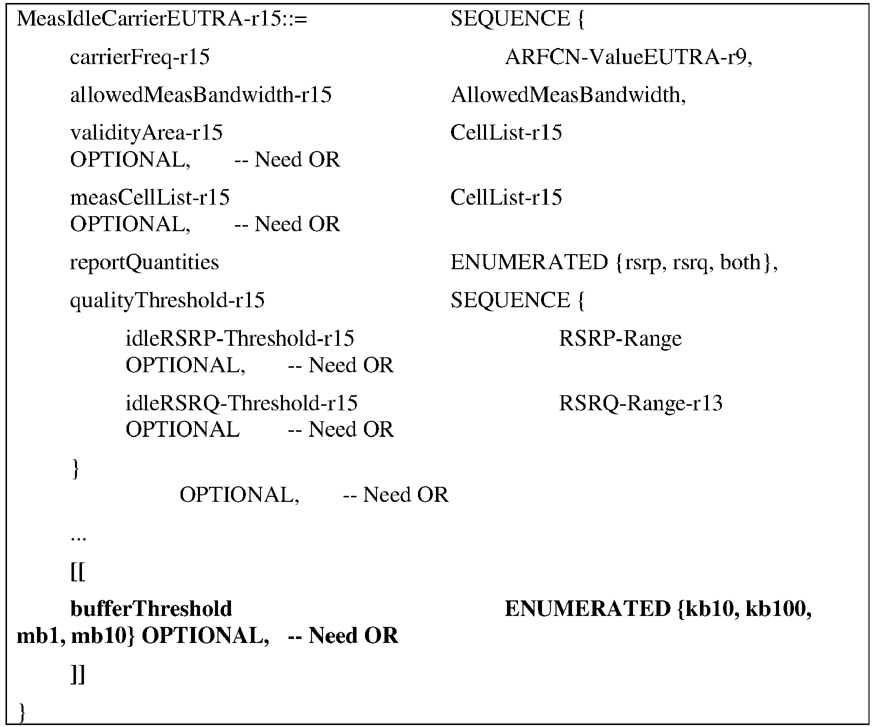

While, in the above example, the thresholds are kb10 = 10 kByte, kb100 = 100 kByte, mb1 = 1 MByte, mb10 = 10 Mbyte, any other threshold values and/or number of thresholds could be used.

In NR a similar parameter could be introduced.

For connected mode, the buffer threshold could be included in the measurement configuration and it could be one threshold applicable for all measurements (e.g. a field inside the *measConfig*) or it could be per measurement to be reported (e.g. a field directly inside the measurement Report Configuration). One reason to have different triggering conditions for different reporting configuration is that some measurements are essential for ensuring handover (e.g. A3 event) and thus it wouldn't be that useful to tie them with conditions such as buffer status, while other measurements (e.g. associated with A4 event) are useful for adding CA and thus it makes sense to combine them with conditions such as buffer status because the UE may not take advantage of a possible CA setup if it has very low traffic. It should be noted that the conditions affect the sending of the measurements at that particular time. That is, if the measurement report gets triggered again (for example, the signal quality for the reporting are fulfilled after the measurement report interval configured in the measurement report configuration has elapsed), the conditions are checked again to see if the measurement report is to be sent or not, and so on.

In one embodiment, the same triggering conditions are applicable for both early and connected mode measurements. These conditions could be communicated via *RRCReconfiguration*, *RRCRelease*, broadcast information, etc.

In one embodiment, the triggering conditions can be combined (e.g. if there is an UL data pending for ultra-reliable low-latency communications (URLLC) traffic and the buffer size is larger than a certain threshold, etc.)

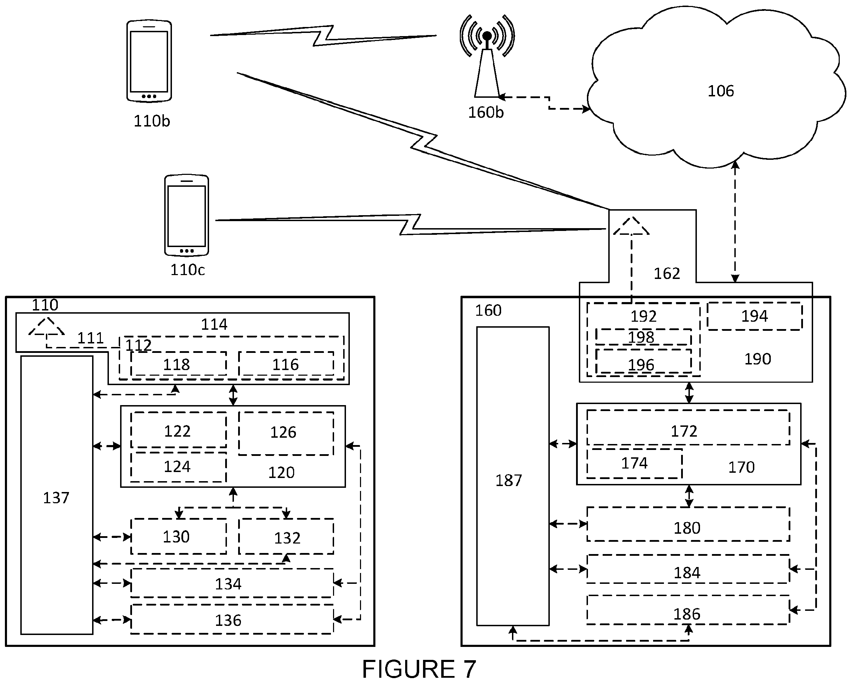

Although the subject matter described herein may be implemented in any appropriate type of system using any suitable components, the embodiments disclosed herein are described in relation to a wireless network, such as the example wireless network illustrated in FIGURE 7. For simplicity, the wireless network of FIGURE 7 only depicts network 106, network nodes 160 and 160b, and wireless devices 110, 110b, and 1 10c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 7, network node 160 includes processing circuitry 170, device readable medium 180, interface 190, auxiliary equipment 184, power source 186, power circuitry 187, and antenna 162. Although network node 160 illustrated in the example wireless network of FIGURE 7 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 7 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

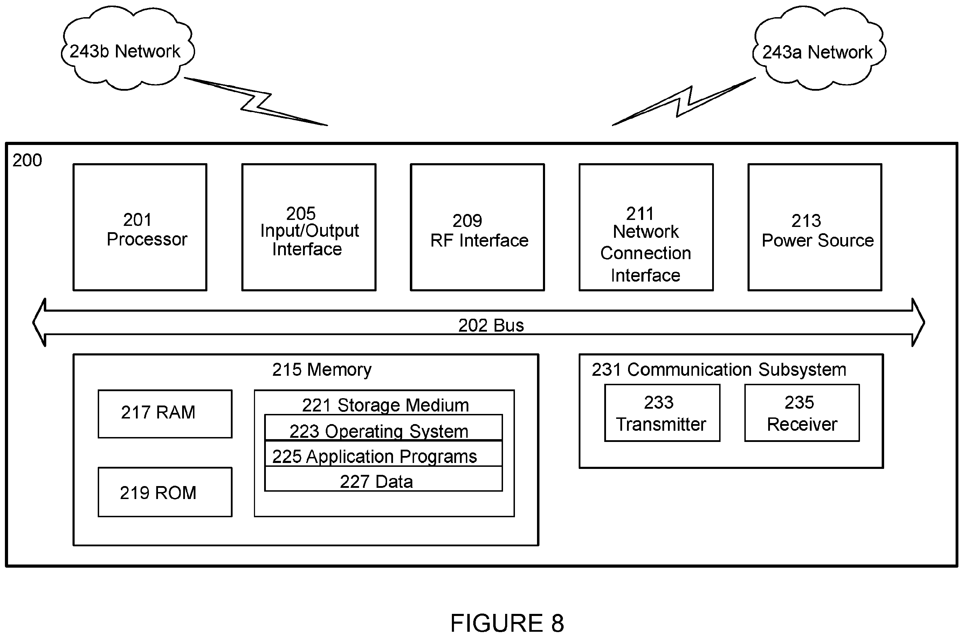

FIGURE 8 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 8, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 8 is a UE, the components discussed herein are equally applicable to a WD, and vice-versa.

In FIGURE 8, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 8, or only a subset of the components. The level of integration between the components may vary from one UE to another UE. Further, certain UEs may contain multiple instances of a component, such as multiple processors, memories, transceivers, transmitters, receivers, etc.

In FIGURE 8, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 8, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to offload data, or to upload data. An article of manufacture, such as one utilizing a communication system may be tangibly embodied in storage medium 221, which may comprise a device readable medium.

In FIGURE 8, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

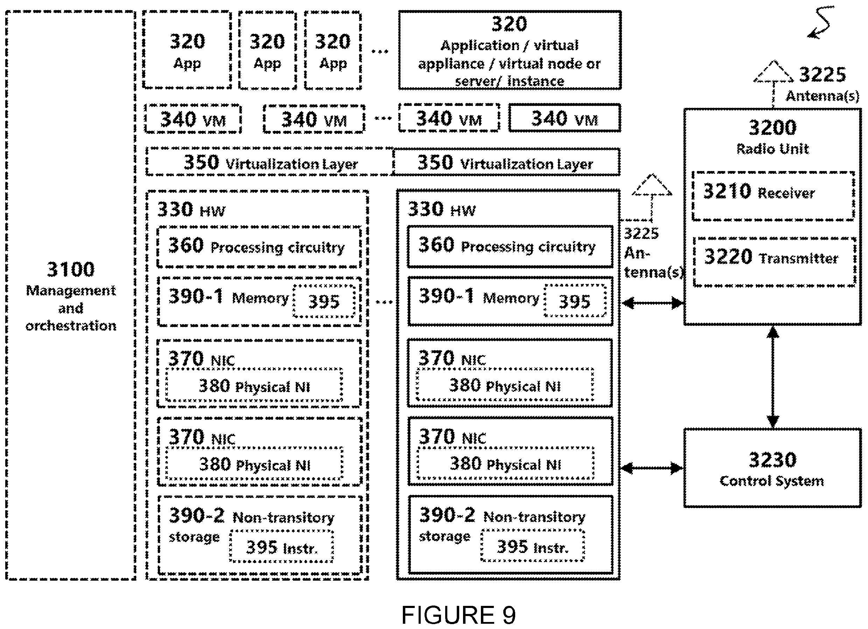

FIGURE 9 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 9, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 9.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

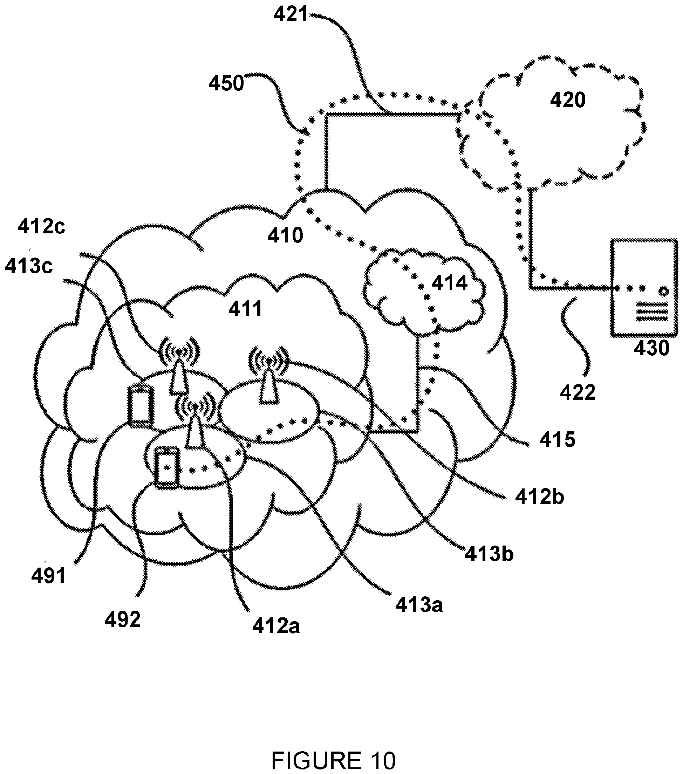

With reference to FIGURE 10, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 10 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

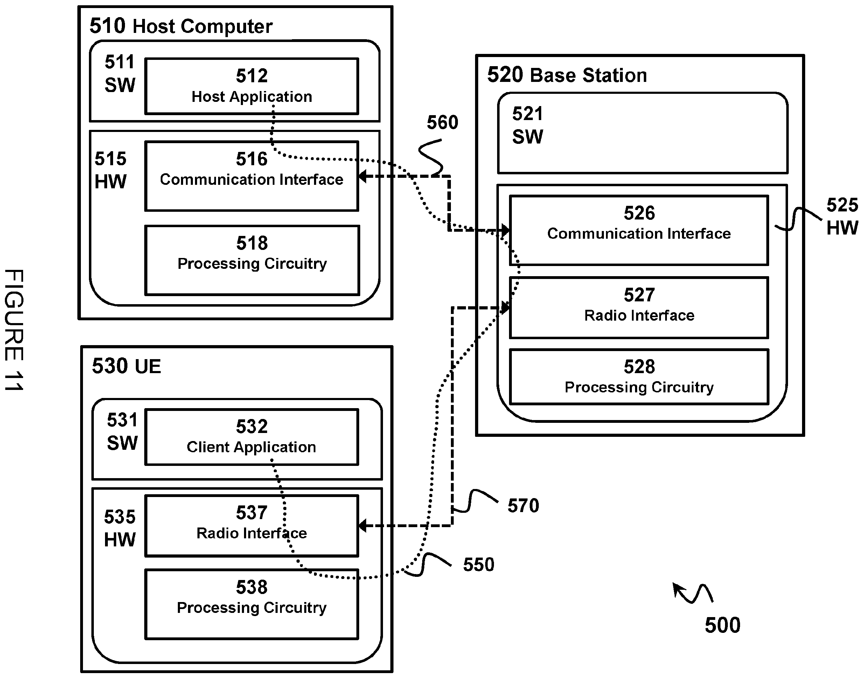

Example implementations, in accordance with an embodiment, of the UE, base station and host computer discussed in the preceding paragraphs will now be described with reference to FIGURE 11. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 11) served by base station 520. Communication interface 526 may be configured to facilitate connection 560 to host computer 510. Connection 560 may be direct or it may pass through a core network (not shown in FIGURE 11) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 11 may be similar or identical to host computer 430, one of base stations 412a, 412b, 412c and one of UEs 491, 492 of FIGURE 10, respectively. This is to say, the inner workings of these entities may be as shown in FIGURE 11 and independently, the surrounding network topology may be that of FIGURE 10.

In FIGURE 11, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the power consumption (e.g., by not configuring CA and/or DC when the UE does not need it) and thereby provide benefits such as extended battery time. Additionally, the teachings of these embodiments may improve performance (e.g., by configuring CA and/or DC when the UE can benefit from it) and thereby improve responsiveness or reduce user wait times.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

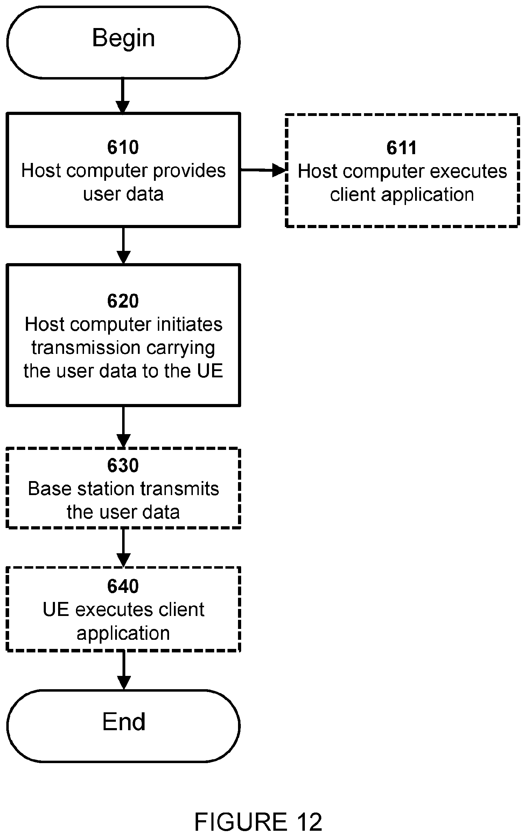

FIGURE 12 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 12 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

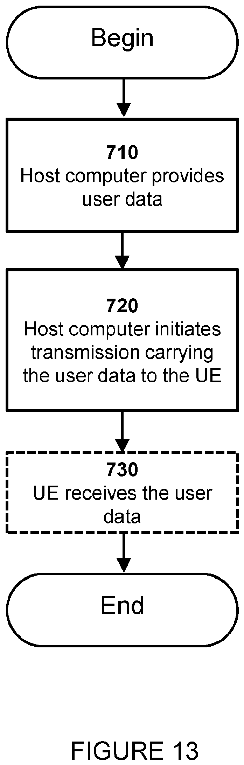

FIGURE 13 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 13 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

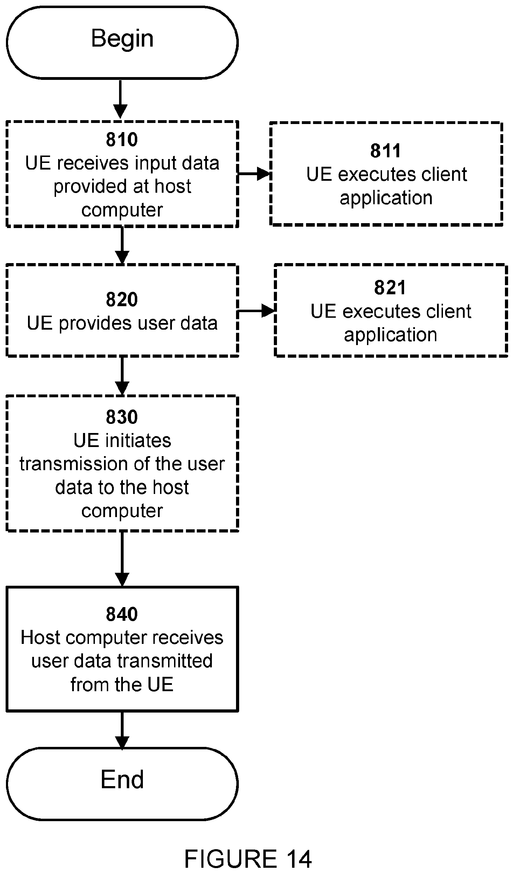

FIGURE 14 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 14 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

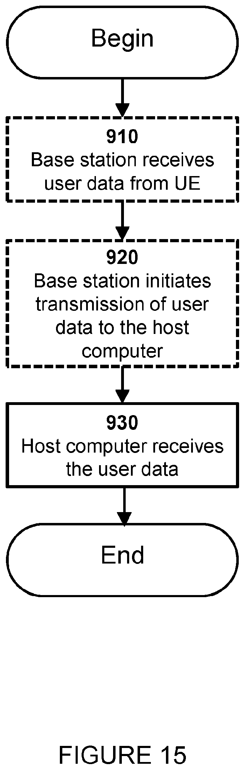

FIGURE 15 is a flowchart illustrating a method implemented in a communication system, in accordance with one embodiment. The communication system includes a host computer, a base station and a UE which may be those described with reference to FIGURES 10 and 11. For simplicity of the present disclosure, only drawing references to FIGURE 15 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

FIGURE 16 depicts a method in accordance with particular embodiments. The method is performed by a wireless device, such as a UE, examples of which are described above. The method begins at step 1602 with determining whether additional carrier capacity would improve a property of a service performed by the wireless device. For example, the service may benefit from carrier aggregation and/or dual connectivity setup because it has a large amount of data to transfer, or because it requires more reliability, which may be provided via carrier aggregation and/or dual connectivity.

In certain embodiments, determining whether the additional carrier capacity would improve the property of the service is based on whether one or more conditions associated with the wireless device are fulfilled. In certain embodiments, the wireless device receives the one or more conditions from the network node. For example, in certain embodiments, the wireless device may receive the one or more conditions from the network node in an RRC Reconfiguration message, an RRC Release message, an RRC Resume message, and/or broadcast information. In certain embodiments, the one or more conditions are based on at least one of the following: resume cause set by access stratum signalling, resume cause set by non-access stratum signalling, buffer status, service-related information from an upper layer, an application being used by the wireless device, the size of pending uplink traffic, the size of requested downlink traffic, service reliability requirements, whether the traffic is only keep-alive signalling, and/or any other suitable conditions. In some embodiments in which the one or more conditions are based on the buffer status, determining whether to send the network node the indication and/or the report may be based on whether the buffer status is greater than a threshold. In certain embodiments, the wireless device may receive the threshold from the wireless node in a measurement configuration message and/or a measurement report configuration message.

In step 1604, the method continues with determining whether to send a network node information related to measurements associated with the wireless device. As an example, the information may include an indication of the availability of the measurements, a report of the measurements, or both, depending on the embodiment. In certain embodiments, the measurements may include measurements performed in idle (e.g., RRC_IDLE) or dormant state (e.g., RRC_IDLE with UE context or RRC_INACTIVE) and reported during a transition to a connected state (e.g., RRC_CONNECTED). In some embodiments, the measurements may include measurements performed and reported in a connected state (e.g., RRC_CONNECTED). In certain embodiments, the determination of whether to send the network node the indication and/or the report is based on the determination, in step 1602, of whether additional carrier capacity would improve a property of a service performed by the wireless device. For example, if, in step 1602 the method determines that additional carrier capacity would improve the property of the service, in step 1604 the method may determine to send the network node the indication and/or the report. As another example, if, in step 1602 the method determines that additional carrier capacity would not improve the property of the service, in step 1604 the method may determine not to send the network node the indication and/or the report.

In response to determining to send the network node the indication and/or report (e.g., if the wireless device would benefit from additional capacity), the method proceeds to step 1606 with sending the indication and/or report to the network node. In certain embodiments, the indication and/or the report is sent in an RRC Resume Complete message, an RRC Setup Complete message, an RRC Resume Request message, and/or a UE Information Response message. In some embodiments, sending the indication and/or the report includes selecting one or more random-access parameters during random-access.

In response to determining not to send the network node the indication and/or report (e.g., if the wireless device would not benefit from additional capacity), the method proceeds to step 1608 with refraining from sending the indication and/or report to the network node.

In some embodiments, the method further includes receiving an allocation of resources from the network node. The allocated resources may be based in part on whether the indication and/or the report was sent to the network node. For example, the network node may allocate additional resources (carrier aggregation and/or dual-connectivity) based on the wireless device having sent the indication and/or the report in step 1606. In response to receiving the allocated resources, the wireless device may use the allocated resources. For example, when the measurements include early measurements, the wireless device may use the allocated resources when resuming the connected state.

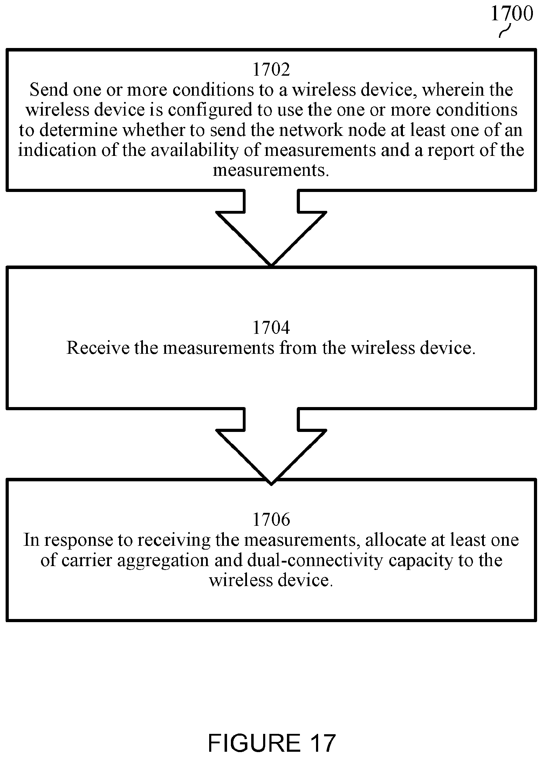

FIGURE 17 depicts a method in accordance with particular embodiments. The method may be performed by a network node, examples of which are described above. The method begins at step 1702 with sending one or more conditions to a wireless device. For example, the method may include sending the one or more conditions in an RRC Reconfiguration message, an RRC Release message, an RRC Resume message, and/or broadcast information. In certain embodiments, the one or more conditions are based on at least one of the following: resume cause set by access stratum signalling, resume cause set by non-access stratum signalling, buffer status, service-related information from an upper layer, an application being used by the wireless device, the size of pending uplink traffic, the size of requested downlink traffic, service reliability requirements, whether the traffic is only keep-alive signalling, and/or any other suitable conditions. The method contemplates that the wireless device is configured to use the one or more conditions to determine whether to send the network node an indication of the availability of measurements and/or a report of the measurements. In certain embodiments, these measurements may include measurements performed in idle (e.g., RRC_IDLE) or dormant state (e.g., RRC_IDLE with UE context or RRC_INACTIVE) and reported during a transition to a connected state (e.g., RRC_CONNECTED). In some embodiments, the measurements may include measurements performed and reported in a connected state (e.g., RRC_CONNECTED).

In certain embodiments, the method may also include sending a measurement configuration to the wireless device. The wireless device may be configured to use the measurement configuration to perform and store the measurements. For example, the wireless device may perform and store idle mode measurements according to received idle mode measurement configurations. As another example, the wireless device may perform connected mode measurements according to a received measurement configuration. In some embodiments in which the one or more conditions are based on at least the buffer status, sending the one or more conditions to the wireless device may include sending a threshold to the wireless device in the measurement configuration (e.g., in a measurement configuration message and/or a measurement report configuration message). The wireless device may then be configured to use the threshold to determine whether to send the network node the indication and/or the report. For example, the wireless device may determine whether to send the network node the indication and/or the report based on whether the buffer status is greater than the threshold.

In step 1704, the method continues with receiving the measurements from the wireless device. In certain embodiments, prior to receiving the measurements from the wireless device, the method includes receiving the indication of the availability of the measurements and, in response to receiving the indication of the availability of the measurements, allocating radio resources to the wireless device for sending the measurements. In step 1706, in response to receiving the measurements, the method continues with allocating carrier aggregation and/or dual-connectivity capacity to the wireless device.

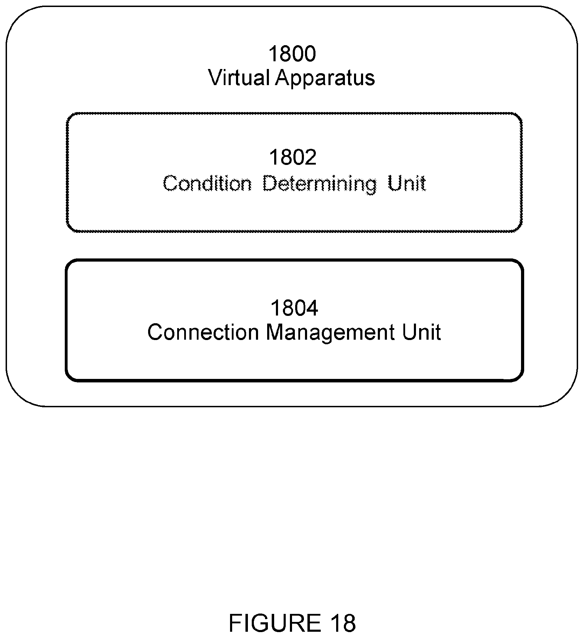

FIGURE 18 illustrates a schematic block diagram of an apparatus 1800 in a wireless network (for example, the wireless network shown in FIGURE 7). In certain embodiments, the apparatus may be implemented in a wireless device (e.g., wireless device 110 in FIGURE 7). Apparatus 1800 is operable to carry out the example methods described with reference to FIGURES 16-17 and possibly any other processes or methods disclosed herein. It is also to be understood that the methods of FIGURES 16-17 are not necessarily carried out solely by apparatus 1800. At least some operations of the methods can be performed by one or more other entities.

Virtual Apparatus 1800 may comprise processing circuitry, which may include one or more microprocessors or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to condition determining unit 1802, connection management unit 1804, and any other suitable units of apparatus 1800 to perform corresponding functions according one or more embodiments of the present disclosure.

As illustrated in FIGURE 18, apparatus 1800 includes condition determining unit 1802 and connection management unit 1804. In general, condition determining unit 1802 may determine if a wireless device transitioning from and idle or dormant state to a connected state and/or a wireless device in a connected state would benefit from additional capacity (e.g., carrier aggregation and/or dual-connectivity). For example, the determination may be based on whether the additional carrier capacity would improve a property of a service performed by the wireless device. The determination of whether the additional carrier capacity would improve the property of the service performed by the wireless device may be based on whether one or more conditions associated with the wireless device have been fulfilled. Examples of conditions may include, but are not limited to, one or more of the following: resume cause set by access stratum signalling, resume cause set by non-access stratum signalling, buffer status, service-related information from an upper layer, application being used by the wireless device, size of pending uplink traffic, size of requested downlink traffic, service reliability requirements, and/or whether the traffic is only keep-alive signalling. Condition determining unit 1802 may provide the results of the determination to connection management unit 1804. Connection management unit 1804 may manage the transition to connected state. In certain embodiments, if the condition determining unit 1802 has indicated that the wireless device would benefit from additional capacity, connection management unit 1804 may send an indication of the availability of early measurements and/or a report of the early measurements to the network node. The early measurements comprise measurements performed in idle or dormant state and reported during a transition to a connected state. If the condition determining unit 1802 has indicated that the wireless device would not benefit from additional capacity, connection management unit 1804 may refrain from sending the early measurement indication or report to the network node. In certain embodiments, if the condition determining unit 1802 has indicated that the wireless device would benefit from additional capacity, connection management unit 1804 may send an indication of the availability of measurements performed in a connected state and/or a report of the measurements performed in the connected state to the network node. If the condition determining unit 1802 has indicated that the wireless device would not benefit from additional capacity, connection management unit 1804 may refrain from sending the measurement indication or report to the network node.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).
- 1× RTT: CDMA2000 1× Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- BI: Backoff Indicator
- BSR: Buffer Status Report
- CA: Carrier Aggregation
- Cat-M1: Category M1
- Cat M2: Category M2
- CC: Carrier Component
- CCCH SDU: Common Control Channel SDU
- CDMA: Code Division Multiplexing Access
- CE: Coverage Enhancement
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eMTC: enhanced Machine-Type-Communication
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- IoT: Internet of Things
- LOS: Line of Sight
- LPP: LTE Positioning Protocol
- LTE: Long-Term Evolution
- M2M: Machine-to-Machine
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MTC: Machine Type Communication
- MSC: Mobile Switching Center
- NAS: Non-Access Stratum
- NB-IoT: Narrowband Internet of Things
- NPDCCH: Narrowband Physical Downlink Control Channel (N)PRACH(Narrowband) Physical Random Access Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDCP: Packet Data Convergence Protocol
- PDP: Profile Delay Profile
- PDSCH: Physical Downlink Shared Channel
- PDU: Protocol Data Unit
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRB: Physical Resource Block
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RA: Random Access
- RAPID: Random Access Preamble Identifier
- RAN: Radio Access Network
- RAR: Random Access Response
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TBS: Transport Block Size
- TDD: Time Division Duplex
- TDOA: Time Difference of Arrival
- TOA: Time of Arrival
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method (1600) performed by a wireless device for measurement reporting during a transition of the wireless device from an idle or dormant state to a connected state, the method comprising:
determining (1602) whether additional carrier capacity would improve a property of a service performed by the wireless device, based on whether one or more conditions associated with the wireless device are fulfilled, wherein the additional carrier capacity uses at least one of carrier aggregation and dual connectivity;
determining (1604) whether to send a network node at least one of an indication of an availability of measurements comprising early measurements performed by the wireless device in the idle or dormant state and a report of the measurements, based at least on the determination of whether the additional carrier capacity would improve the property of the service performed by the wireless device;
in response to determining to send the network node the at least one of the indication and the report, sending (1606) the at least one of the indication and the report to the network node; and
in response to determining not to send the network node the at least one of the indication and the report, refraining (1608) from sending the at least one of the indication and the report to the network node,
wherein the one or more conditions are based on at least one of the following:
buffer status;
service-related information from an upper layer;
application being used by the wireless device;
size of pending uplink traffic;
size of requested downlink traffic;
service reliability requirements; and
whether the traffic is only keep-alive signaling.

2. The method of claim 1, wherein the measurements are reported during a transition to the connected state.

3. The method of claim 2, wherein sending the at least one of the indication and the report comprises at least one of:
sending the at least one of the indication and the report in at least one of:
a Radio Resource Control, RRC, Resume Complete message;
an RRC Setup Complete message;
an RRC Resume Request message; and
a UE Information Response message; and
selecting one or more random-access parameters during random-access.

4. The method of claim 2, wherein:
the idle or dormant state corresponds to at least one of an RRC_IDLE state, an RRC_IDLE state with UE context, and an RRC_INACTIVE state; and
the connected state corresponds to an RRC_CONNECTED state.

5. The method of any of claims 1-4, further comprising receiving the one or more conditions from the network node.

6. The method of claim 5, wherein the one or more conditions are received from the network node in at least one of:
an RRC Reconfiguration message;
an RRC Release message;
an RRC Resume message; and
broadcast information.

7. The method of any of claims 1-6, wherein the one or more conditions are based on at least one of the following:
resume cause set by access stratum signaling; and
resume cause set by non-access stratum signaling.

8. The method of any of claims 1 to 7, wherein the one or more conditions are based on at least the buffer status, such that determining whether to send the network node the at least one of the indication and the report is based on whether the buffer status is greater than a threshold.

9. The method of any of claims 1-8, further comprising:
receiving an allocation of resources from the network node, the allocated resources based in part on whether the at least one of the indication and the report was sent to the network node; and
using the allocated resources.

10. The method of claim 9, wherein:
the allocated resources are used when resuming the connected state.

11. A wireless device (110, 200), the wireless device comprising:
power supply circuitry (137, 213) configured to supply power to the wireless device; and
processing circuitry (120, 201) configured to perform the method according to any one of claims 1-10.

## Patentansprüche

1. Verfahren (1600), das von einer drahtlosen Vorrichtung durchgeführt wird, zur Messungsmeldung während eines Übergangs der drahtlosen Vorrichtung von einem Ruhe- oder Schlafzustand in einen verbundenen Zustand, wobei das Verfahren umfasst:
Bestimmen (1602), ob zusätzliche Trägerkapazität eine Eigenschaft eines von der drahtlosen Vorrichtung durchgeführten Dienstes verbessern würde, basierend darauf, ob eine oder mehrere mit der drahtlosen Vorrichtung assoziierte Bedingungen erfüllt werden, wobei die zusätzliche Trägerkapazität mindestens eine von Trägeraggregation und Dualkonnektivität verwendet;
Bestimmen (1604), ob einem Netzwerkknoten mindestens eine von einer Anzeige einer Verfügbarkeit von Messungen, die von der drahtlosen Vorrichtung im Ruhe- oder Schlafzustand durchgeführte Frühmessungen umfassen, und einer Meldung der Messungen gesendet werden soll, zumindest basierend auf der Bestimmung dessen, ob die zusätzliche Trägerkapazität die Eigenschaft des von der drahtlosen Vorrichtung durchgeführten Dienstes verbessern würde;
Senden (1606) der mindestens einen von der Anzeige und der Meldung an den Netzwerkknoten in Reaktion auf das Bestimmen, dass dem Netzwerkknoten die mindestens eine der Anzeige und der Meldung gesendet werden soll; und
Unterlassen des Sendens (1608) der mindestens einen von der Anzeige und der Meldung an den Netzwerkknoten in Reaktion auf das Bestimmen, dass dem Netzwerkknoten die mindestens eine der Anzeige und der Meldung nicht gesendet werden soll,
wobei die eine oder die mehreren Bedingungen auf mindestens einem von Folgenden basieren:
einem Pufferstatus:
dienstbezogenen Informationen von einer höheren Schicht;
einer Anwendung, die von der drahtlosen Vorrichtung verwendet wird;
einer Größe von anhängigem Uplink-Verkehr;
einer Größe von angefordertem Downlink-Verkehr;
Dienstzuverlässigkeitsanforderungen; und
ob es sich bei dem Verkehr nur um Keep-alive-Signalisierung handelt.

2. Verfahren nach Anspruch 1, wobei die Messungen während eines Übergangs in den verbundenen Zustand gemeldet werden.

3. Verfahren nach Anspruch 2, wobei das Senden der mindestens einen von der Anzeige und der Meldung mindestens eines von Folgendem umfasst:
Senden der mindestens einen von der Anzeige und der Meldung in mindestens einer von:
einer Funkressourcensteuerungs-,RRC-,Wiederaufnahme-abgeschlossen-Nachricht;
einer RRC-Aufbau-abgeschlossen-Nachricht;
einer RRC-Wiederaufnahmeanforderungsnachricht; und
einer UE-Informationsantwortnachricht; und
Auswählen eines oder mehrerer Direktzugriffsparameter während eines Direktzugriffs.

4. Verfahren nach Anspruch 2, wobei:
der Ruhe- oder Schlafzustand mindestens einem von einem RRC_IDLE-Zustand, einem RRC_IDLE-Zustand mit UE-Kontext und einem RRC_INACTIVE-Zustand entspricht; und
der verbundene Zustand einem RRC_CONNECTED-Zustand entspricht.

5. Verfahren nach einem der Ansprüche 1 bis 4, ferner umfassend ein Empfangen der einen oder der mehreren Bedingungen vom Netzwerkknoten.

6. Verfahren nach Anspruch 5, wobei die eine oder die mehreren Bedingungen vom Netzwerkknoten in mindestens einer empfangen werden von:
einer RRC-Rekonfigurationsnachricht;
einer RRC-Freigabenachricht;
einer RRC-Wiederaufnahmenachricht; und
Broadcast-Informationen.

7. Verfahren nach einem der Ansprüche 1 bis 6, wobei die eine oder die mehreren Bedingungen auf mindestens einem von Folgenden basieren:
einem Wiederaufnahmegrund, der durch Access-Stratum-Signalisierung festgelegt wird; und
einem Wiederaufnahmegrund, der durch Non-Access-Stratum-Signalisierung festgelegt wird.

8. Verfahren nach einem der Ansprüche 1 bis 7, wobei die eine oder die mehreren Bedingungen zumindest auf dem Pufferstatus basieren, derart dass das Bestimmen, ob dem Netzwerkknoten die mindestens eine von der Anzeige oder der Meldung gesendet werden soll, darauf basiert, ob der Pufferstatus größer als ein Schwellenwert ist.

9. Verfahren nach einem der Ansprüche 1 bis 8, ferner umfassend:
Empfangen einer Zuweisung von Ressourcen vom Netzwerkknoten, wobei die zugewiesenen Ressourcen zum Teil darauf basieren, ob die mindestens eine von der Anzeige und der Meldung an den Netzwerkknoten gesendet wurde; und
Verwenden der zugewiesenen Ressourcen.

10. Verfahren nach Anspruch 9, wobei:
die zugewiesenen Ressourcen bei Wiederaufnahme des verbundenen Zustands verwendet werden.

11. Drahtlose Vorrichtung (110, 200), wobei die drahtlose Vorrichtung umfasst:
Leistungsversorgungsschaltungsanordnung (137, 213), die zum Versorgen der drahtlosen Vorrichtung mit Leistung konfiguriert ist; und
Verarbeitungsschaltungsanordnung (120, 201), der zum Durchführen des Verfahrens nach einem der Ansprüche 1 bis 10 konfiguriert ist.

## Revendications

1. Procédé (1600) réalisé par un dispositif sans fil pour un rapport de mesure au cours d'une transition du dispositif sans fil d'un état en veille ou dormant à un état connecté, le procédé comprenant :
la détermination (1602) si une capacité de porteuse supplémentaire améliorerait ou non une propriété d'un service réalisé par le dispositif sans fil, selon qu'une ou plusieurs conditions associées au dispositif sans fil sont ou non satisfaites, dans lequel la capacité de porteuse supplémentaire utilise au moins l'une parmi une agrégation de porteuse et une connectivité double ;
la détermination (1604) s'il faut ou non envoyer, à un noeud de réseau, au moins l'un parmi une indication d'une disponibilité de mesures comprenant des mesures précoces réalisées par le dispositif sans fil dans l'état en veille ou dormant et un rapport des mesures, sur la base au moins de la détermination si la capacité de porteuse supplémentaire améliorerait ou non la propriété du service réalisé par le dispositif sans fil ;
en réponse à la détermination d'envoyer, au noeud de réseau, l'au moins l'un parmi l'indication et le rapport, l'envoi (1606) de l'au moins un parmi l'indication et le rapport au noeud de réseau ; et
en réponse à la détermination de ne pas envoyer, au noeud de réseau, l'au moins un parmi l'indication et le rapport, l'abstention (1608) d'envoyer l'au moins un parmi l'indication et le rapport au noeud de réseau,
dans lequel les une ou plusieurs conditions sont basées sur au moins l'un parmi ce qui suit :
statut de mémoire tampon ;
informations liées au service provenant d'une couche supérieure ;
application en cours d'utilisation par le dispositif sans fil ;
taille de trafic de liaison montante en attente ;
taille de trafic de liaison descendante demandé ;
exigences de fiabilité de service ; et
si le trafic est ou non uniquement une signalisation de maintien en activité.

2. Procédé selon la revendication 1, dans lequel les mesures sont rapportées au cours d'une transition à l'état connecté.

3. Procédé selon la revendication 2, dans lequel l'envoi de l'au moins un parmi l'indication et le rapport comprend au moins l'un parmi :
l'envoi de l'au moins un parmi l'indication et le rapport dans au moins l'un parmi :
un message Radio Resource Control, RRC, Resume Complete ;
un message RRC Setup Complete ;
un message RRC Resume Request ; et
un message UE Information Response ; et
la sélection d'un ou plusieurs paramètres d'accès aléatoire au cours d'un accès aléatoire.

4. Procédé selon la revendication 2, dans lequel :
l'état en veille ou dormant correspond à au moins l'un parmi un état RRC_IDLE, un état RRC_IDLE avec contexte d'UE, et un état RRC_INACTIVE ; et
l'état connecté correspond à un état RRC_CONNECTED.

5. Procédé selon l'une quelconque des revendications 1 à 4, comprenant en outre la réception des une ou plusieurs conditions depuis le noeud de réseau.

6. Procédé selon la revendication 5, dans lequel les une ou plusieurs conditions sont reçues depuis le noeud de réseau dans au moins l'un parmi :
un message RRC Reconfiguration ;
un message RRC Release ;
un message RRC Resume ; et
des informations de diffusion.

7. Procédé selon l'une quelconque des revendications 1 à 6, dans lequel les une ou plusieurs conditions sont basées sur au moins l'une parmi ce qui suit :
une cause de reprise réglée par une signalisation de strates d'accès ; et
une cause de reprise réglée par une signalisation de strates sans accès.

8. Procédé selon l'une quelconque des revendications 1 à 7, dans lequel les une ou plusieurs conditions sont basées sur au moins le statut de mémoire tampon, de sorte que la détermination s'il faut ou non envoyer, au noeud de réseau, l'au moins un parmi l'indication et le rapport soit basée sur le fait que le statut de mémoire tampon est ou non plus grand qu'un seuil.

9. Procédé selon l'une quelconque des revendications 1 à 8, comprenant en outre :
la réception d'une attribution de ressources depuis le noeud de réseau, les ressources attribuées étant basées en partie sur le fait que l'au moins un parmi l'indication et le rapport a ou non été envoyé au noeud de réseau ; et
l'utilisation des ressources attribuées.

10. Procédé selon la revendication 9, dans lequel :
les ressources attribuées sont utilisées lors de la reprise de l'état connecté.

11. Dispositif sans fil (110, 200), le dispositif sans fil comprenant :
une circuiterie de fourniture d'énergie (137, 213) configurée pour fournir de l'énergie au dispositif sans fil ; et
une circuiterie et de traitement (120, 201) configurée pour réaliser le procédé selon l'une quelconque des revendications 1 à 10.
